(19) Europäisches Patentamt
European Patent Office
Office européen des brevets

(11) **EP 4 683 324 A1**

(12) **EUROPEAN PATENT APPLICATION**
published in accordance with Art. 153(4) EPC

(43) Date of publication:
**21.01.2026 Bulletin 2026/04**

(21) Application number: **24773941.0**

(22) Date of filing: **11.03.2024**

(51) International Patent Classification (IPC):
*H04N 19/20* (2014.01)

(52) Cooperative Patent Classification (CPC):
**H04N 19/20; H04N 19/44**

(86) International application number:
**PCT/CN2024/080893**

(87) International publication number:
**WO 2024/193374 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.03.2023 CN 202310262637**

(71) Applicant: **Vivo Mobile Communication Co., Ltd.
Dongguan, Guangdong 523863 (CN)**

(72) Inventors:
• ZOU, Wenjie
  Dongguan, Guangdong 523863 (CN)
• ZHANG, Wei
  Dongguan, Guangdong 523863 (CN)
• YANG, Fuzheng
  Dongguan, Guangdong 523863 (CN)
• LV, Zhuoyi
  Dongguan, Guangdong 523863 (CN)

(74) Representative: **Conti, Marco
Bugnion S.p.A.
Via di Corticella, 87
40128 Bologna (IT)**

(54) **ENCODING PROCESSING METHOD, DECODING PROCESSING METHOD AND RELATED DEVICE**

(57)     This application discloses an encoding processing method, a decoding processing method, and a related device, pertaining to the field of three-dimensional mesh coding technologies. The encoding processing method of embodiments of this application includes: determining a base mesh bitstream based on a to-be-encoded mesh; performing displacement encoding on first vertex displacements to obtain a displacement bitstream, where the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh; and generating a target bitstream based on a to-be-encoded texture map corresponding to the to-be-encoded mesh, the base mesh bitstream, and the displacement bitstream, where the target bitstream includes target identification information, and the target identification information is used to indicate that an encoding mode of the displacement bitstream is a video encoding mode or an entropy encoding mode.

Determine a base mesh bitstream based on a to-be-encoded mesh — 301

Perform displacement encoding on first vertex displacements to obtain a displacement bitstream — 302

Generate a target bitstream based on a to-be-encoded texture map corresponding to the to-be-encoded mesh, the base mesh bitstream, and the displacement bitstream — 303

FIG. 3

Description

**CROSS-REFERENCE TO RELATED APPLICATIONS**

This application claims priority to Chinese Patent Application No. 202310262637.7, filed in China on March 17, 2023, which is incorporated herein by reference in its entirety.

**TECHNICAL FIELD**

This application pertains to the field of three-dimensional mesh coding technologies, and specifically, relates to an encoding processing method, a decoding processing method, and a related device.

**BACKGROUND**

In the three-dimensional mesh encoding process, displacements are obtained by calculating distances between vertices of a reconstructed mesh and vertices of an original mesh, representing distances from vertices of the reconstructed mesh to nearest neighboring points on an original input mesh, with the purpose of improving the quality of the mesh. Currently, displacements are typically encoded using a fixed encoding mode, for example, using a video encoder to encode the displacements. Therefore, in the related art, there is a problem of poor flexibility in displacement encoding.

**SUMMARY**

Embodiments of this application provide an encoding processing method, a decoding processing method, and a related device, so as to resolve the problem of poor flexibility in displacement encoding.

According to a first aspect, an encoding processing method is provided, applied to an encoding end and including:

determining a base mesh bitstream based on a to-be-encoded mesh;
performing displacement encoding on first vertex displacements to obtain a displacement bitstream, where the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh; and
generating a target bitstream based on a to-be-encoded texture map corresponding to the to-be-encoded mesh, the base mesh bitstream, and the displacement bitstream, where the target bitstream includes target identification information, and the target identification information is used to indicate that an encoding mode of the displacement bitstream is a video encoding mode or an entropy encoding mode.

According to a second aspect, a decoding processing method is provided, applied to a decoding end and including:

receiving a target bitstream, where the target bitstream includes a displacement bitstream and target identification information, and the target identification information is used to indicate that an encoding mode of the displacement bitstream is a video encoding mode or an entropy encoding mode;
determining a target decoding mode based on the target identification information; and
decoding the displacement bitstream based on the target decoding mode to obtain a third vertex displacement.

According to a third aspect, an encoding processing apparatus is provided, applied to an encoding end and including:

a first processing module, configured to determine a base mesh bitstream based on a to-be-encoded mesh;
a first encoding module, configured to perform displacement encoding on first vertex displacements to obtain a displacement bitstream, where the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh; and
a generating module, configured to generate a target bitstream based on a to-be-encoded texture map corresponding to the to-be-encoded mesh, the base mesh bitstream, and the displacement bitstream, where the target bitstream includes target identification information, and the target identification information is used to indicate that an encoding mode of the displacement bitstream is a video encoding mode or an entropy encoding mode.

According to a fourth aspect, a decoding processing apparatus is provided, applied to a decoding end and including:

a receiving module, configured to receive a target bitstream, where the target bitstream includes a displacement bitstream and target identification information, and the target identification information is used to indicate that an encoding mode of the displacement bitstream is a video encoding mode or an entropy encoding mode;
a determining module, configured to determine a target decoding mode based on the target identification information; and
a first decoding module, configured to decode the displacement bitstream based on the target decoding mode to obtain a third vertex displacement.

According to a fifth aspect, an encoding processing method is provided, applied to an encoding end and including:

determining a base mesh bitstream based on a to-be-encoded mesh;
performing displacement encoding on first vertex displacements to obtain a displacement bitstream, where a mode of the displacement encoding is an entropy encoding mode.

According to a sixth aspect, an decoding processing method is provided, applied to a decoding end and including:

obtaining a target bitstream; and
performing entropy decoding on the target bitstream to obtain a vertex displacement.

According to a seventh aspect, an encoding processing apparatus is provided, applied to an encoding end and including:

a second processing module, configured to determine a base mesh bitstream based on a to-be-encoded mesh; and
a second encoding module, configured to perform displacement encoding on first vertex displacements to obtain a displacement bitstream, where a mode of the displacement encoding is an entropy encoding mode.

According to an eighth aspect, a decoding processing apparatus is provided, applied to a decoding end and including:

an obtaining module, configured to obtain a target bitstream; and
a second decoding module, configured to perform entropy decoding on the target bitstream to obtain a vertex displacement.

According to a ninth aspect, an electronic device is provided, where the electronic device includes a processor and a memory, where a program or instructions capable of running on the processor are stored in the memory; and when the program or instructions are executed by the processor, the steps of the method according to the first aspect are implemented; or when the program or instructions are executed by the processor, the steps of the method according to the second aspect are implemented; or when the program or instructions are executed by the processor, the steps of the method according to the fifth aspect are implemented; or when the program or instructions are executed by the processor, the steps of the method according to the sixth aspect are implemented.

According to a tenth aspect, an electronic device is provided, including a processor and a communication interface, where

when the electronic device is an encoding end, the processor is configured to determine a base mesh bitstream based on a to-be-encoded mesh; perform displacement encoding on first vertex displacements to obtain a displacement bitstream, where the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh; and generate a target bitstream based on a to-be-encoded texture map corresponding to the to-be-encoded mesh, the base mesh bitstream, and the displacement bitstream, where the target bitstream includes target identification information, and the target identification information is used to indicate that an encoding mode of the displacement bitstream is a video encoding mode or an entropy encoding mode; and

when the electronic device is a decoding end, the communication interface is configured to receive a target bitstream, where the target bitstream includes a displacement bitstream and target identification information, and the target identification information is used to indicate that an encoding mode of the displacement bitstream is a video encoding mode or an entropy encoding mode; and the processor is configured to determine a target decoding mode based on the target identification information; and decode the displacement bitstream based on the target decoding mode to obtain a third vertex displacement;

or,

when the electronic device is an encoding end, the processor is configured to determine a base mesh bitstream based on a to-be-encoded mesh, and perform displacement encoding on first vertex displacements to obtain a displacement bitstream, where a mode of the displacement encoding is an entropy encoding mode; and

when the electronic device is a decoding end, the processor is configured to obtain a target bitstream, and perform entropy decoding on the target bitstream to obtain a vertex displacement.

According to an eleventh aspect, a video encoding and decoding system is provided, including an encoding end device and a decoding end device, where the encoding end device can be configured to perform the steps of the encoding processing method according to the first aspect, and the decoding end device can be configured to perform the steps of the decoding processing method according to the second aspect; or

the encoding end device can be configured to perform the steps of the encoding processing method according to the fifth aspect, and the decoding end device can be configured to perform the steps of the decoding processing method according to the sixth aspect.

According to a twelfth aspect, a readable storage medium is provided, where a program or instructions are stored in the readable storage medium; and when the program or the instructions are executed by a processor, the steps of the method according to the first aspect are implemented, the steps of the method according to the second aspect are implemented, the steps of the method according to the fifth aspect are implemented, or the steps of the method according to the sixth aspect are implemented.

According to a thirteenth aspect, a chip is provided, where the chip includes a processor and a communication interface, the communication interface is coupled to the processor, and the processor is configured to run a program or instructions to implement the steps of the method according to the first aspect, or the steps of the method according to the second aspect, or the steps of the method according to the fifth aspect, or the steps of the method according to the sixth aspect.

According to a fourteenth aspect, a computer program/program product is provided, where the computer program/program product is stored in a storage medium, and the computer program/program product is executed by at least one processor to implement the steps of the method according to the first aspect, or the steps of the method according to the second aspect, or the steps of the method according to the fifth aspect, or the steps of the method according to the sixth aspect.

In the embodiments of this application, because the target identification information is set in the target bitstream to indicate the encoding mode of the displacement bitstream, different displacement encoding modes can be used for displacement encoding according to different requirements, thereby improving flexibility of displacement encoding.

**BRIEF DESCRIPTION OF DRAWINGS**

FIG. 1 is a diagram of a conventional encoding framework;

FIG. 2 is a diagram of a conventional decoding framework;

FIG. 3 is a schematic flowchart of an encoding processing method according to an embodiment of this application;

FIG. 4 is an example diagram of a mesh simplification operation in an encoding processing method according to an embodiment of this application;

FIG. 5 is an example diagram of subdivision processing in an encoding processing method according to an embodiment of this application;

FIG. 6 is an example diagram of an encoding framework in an encoding processing method according to an embodiment of this application;

FIG. 7 is a schematic flowchart of a decoding processing method according to an embodiment of this application;

FIG. 8 is an example diagram of a decoding framework in a decoding processing method according to an embodiment of this application;

FIG. 9 is a structural diagram of an encoding processing apparatus according to an embodiment of this application;
FIG. 10 is a structural diagram of a decoding processing apparatus according to an embodiment of this application;
FIG. 11 is a structural diagram of a communication device according to an embodiment of this application; and
FIG. 12 is a structural diagram of an electronic device according to an embodiment of this application.

**DETAILED DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, "or" in the specification and claims means at least one of the connected objects. For example, "A or B" covers three scenarios: scenario 1, including A but not B; scenario 2, including B but not A; scenario 3, including both A and B. The character "/" generally indicates an "or" relationship between associated objects.

The term "indication" in the specification and claims of this application can be either an explicit indication or an implicit indication. The explicit indication may be understood as: a sender explicitly notifies, in a sent indication, a receiver of an operation or a request result that needs to be performed; and the implicit indication may be understood as: the receiver performs determining according to the indication sent by the sender, and determines, according to a determining result, an operation or a request result that needs to be performed.

An encoding end and a decoding end corresponding to the encoding and decoding processing method in the embodiments of this application may be a terminal. The terminal can also be referred to as a terminal device or user equipment (User Equipment, UE). The terminal may be a terminal-side device such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (Vehicle User Equipment, VUE), or pedestrian user equipment (Pedestrian User Equipment, PUE). The wearable device includes: a smart watch, a wrist band, earphones, glasses, and the like. It should be noted that a specific type of the terminal is not limited in the embodiments of this application.

For ease of understanding, the following describes some content involved in the embodiments of this application:

I. Visual volumetric video-based coding (Visual Volumetric Video-based Coding, V3C) standard.

The V3C standard provides a method for encoding and decoding various three-dimensional media using video or image coding technology. Specifically, it converts three-dimensional media content from a three-dimensional representation to multiple two-dimensional representations (referred to as V3C components) through projection or other methods before encoding, and then encodes the two-dimensional representations using existing video or image coding technology. The V3C components mainly include an occupancy component, a geometry component, and an attribute component. The occupancy component may indicate which areas in the two-dimensional representation are associated with data in the three-dimensional representation; the geometry component indicates information related to the position of the three-dimensional data in space, and the attribute component may provide attribute information corresponding to vertices, such as material and texture. In addition, the components also include information on how to reconstruct the three-dimensional model through these components, referred to as atlas (atlas) information.

The atlas information is used to associate all components, and additional information for reconstructing from two-dimensional back to three-dimensional is also included in the atlas component. The atlas consists of multiple basic units, referred to as patches (patch). Each patch indicates a region in the available two-dimensional components and contains the information needed to project that region back to three-dimensional space.

II. Video-based dynamic mesh coding (Video-based dynamic mesh coding, VDMC).

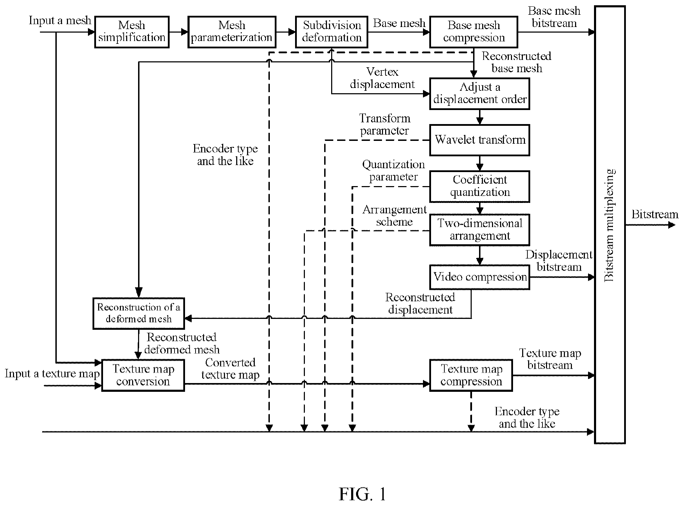

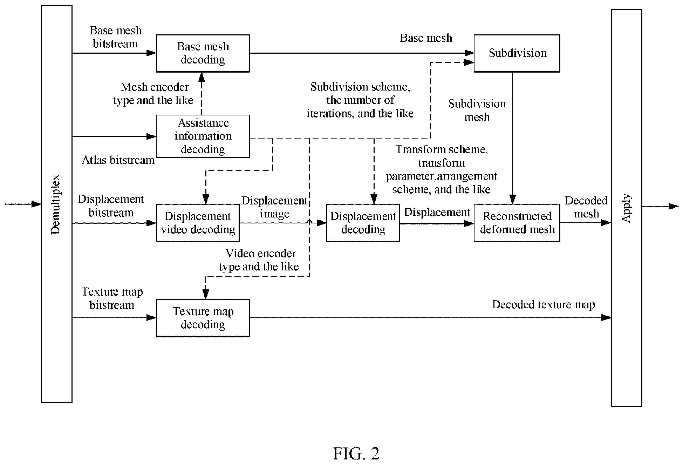

VDMC is a standard formulated by the Moving Picture Experts Group (Moving Picture Experts Group, MPEG) for compressing three-dimensional meshes. Its main idea is to compress three-dimensional meshes using the existing V3C standard. Since three-dimensional meshes have connectivity information that needs to be encoded, its specific encoding process is slightly different from V3C, requiring extensions to the syntax semantics and decoding operations at the decoding end of the V3C standard to support the decoding and reconstruction of three-dimensional meshes. The encoding and decoding frameworks related to VDMC are shown in FIGs. 1 and 2.

The overall framework at the encoding end is shown in FIG. 1. For an input mesh, it is first simplified by using a simplifying module, and then mesh parameterization is performed on the mesh to generate new texture coordinates. Subsequently, the parameterized mesh is subjected to subdivision processing and deformation processing, that is, new vertices are inserted into the mesh according to a specific subdivision processing method, and the distances from the subdivision mesh vertices to the nearest neighboring points on the input mesh are calculated, referred to as displacement information. Subsequently, the vertex positions of the parameterized mesh, that is, the mesh before subdivision deformation, are adjusted based on the displacement information, and the adjusted mesh is referred to as a base mesh, which is sent to a base mesh encoding module. The base mesh is compressed using an existing mesh encoder by the base mesh encoding module. In inter-frame mode, motion vectors are also generated for each vertex of the base mesh based on a reference frame; and only motion vectors are compressed for the base mesh. The base mesh is reconstructed after encoding, and then the displacement order is adjusted according to the vertex order of the reconstructed base mesh. Subsequently, the vertex displacement information after order adjustment is first subjected to wavelet transform, transformed coefficients (or referred to as wavelet coefficients) are quantized, and then quantized coefficients are arranged into a two-dimensional image according to a specific scanning order, and the two-dimensional image is encoded using a video encoder. Then, the reconstructed displacement information is applied to the subdivided base mesh to obtain a reconstructed subdivided deformed mesh, which, along with the original input mesh and its corresponding texture map, is input to a corresponding texture map conversion module to obtain a texture map corresponding to the reconstructed mesh, and the texture map is also encoded using a video encoder. Parameters used in the encoding process, such as the type of a video encoder used, the type of a mesh encoder, transform parameters, or quantization parameters, are passed to the decoding end through assistance information.

The overall framework at the decoding end is shown in FIG. 2. For received bitstreams, the decoding end first demultiplexes the bitstreams to separately obtain a base mesh bitstream (base mesh bitstreams), a displacement bitstream (displacement bitstreams), a texture map bitstream (texture map bitstreams), and an atlas bitstream (atlas bitstreams). For the base mesh bitstream, it is decoded using a mesh decoder indicated by the assistance information to obtain the base mesh. The displacement bitstream and the texture map bitstream are decoded using a video decoder. For the displacement part, after video decoding, the displacement is extracted from the image through a displacement decoding module, and inverse quantization, inverse transform, and other steps are performed, and then it is applied to the subdivided base mesh to obtain the deformed mesh reconstructed at the decoding end. The texture map after decoding is a texture map corresponding to a reconstructed deformed mesh. Subsequent application or rendering modules take the reconstructed deformed mesh and the decoded texture map as input for processing.

The following specifically describes the encoding processing method provided in the embodiments of this application through some embodiments and application scenarios thereof with reference to the accompanying drawings.

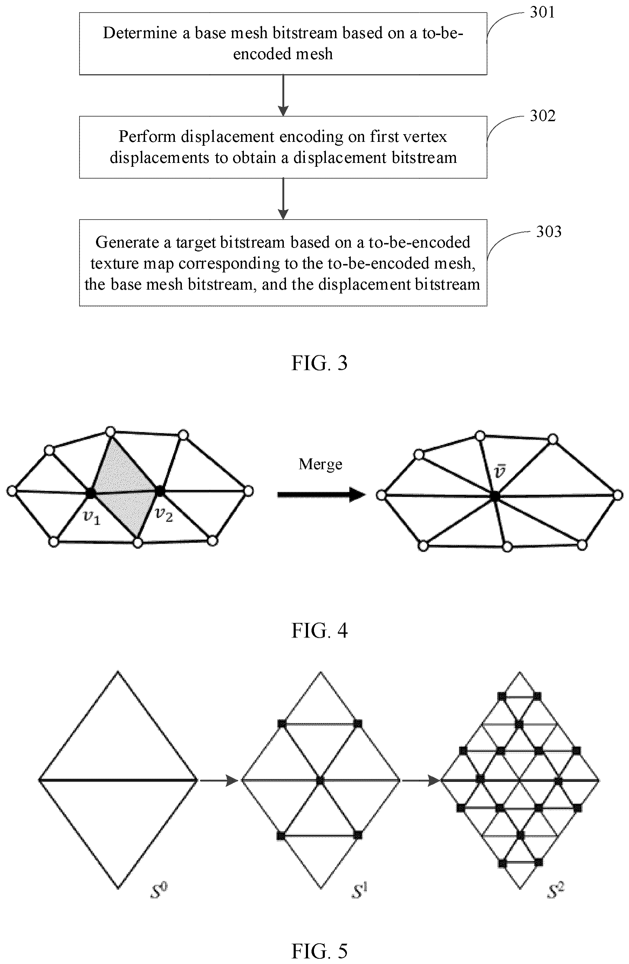

Referring to FIG. 3, an embodiment of this application provides an encoding processing method. As shown in FIG. 3, the encoding processing method includes the following steps.

Step 301: Determine a base mesh bitstream based on a to-be-encoded mesh.

Step 302: Perform displacement encoding on first vertex displacements to obtain a displacement bitstream, where the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh.

Step 303: Generate a target bitstream based on a to-be-encoded texture map corresponding to the to-be-encoded mesh, the base mesh bitstream, and the displacement bitstream, where the target bitstream includes target identification information, and the target identification information is used to indicate that an encoding mode of the displacement bitstream is a video encoding mode or an entropy encoding mode.

In this embodiment of this application, the determining a base mesh bitstream based on a to-be-encoded mesh may include the following procedures:

performing mesh simplification and mesh parameterization on the to-be-encoded mesh to obtain a first mesh; performing subdivision processing and deformation processing on the first mesh to obtain displacement information and a second mesh that is obtained by adjusting vertex positions on the first mesh; and performing compression encoding on the second mesh to obtain the base mesh bitstream.

Optionally, mesh simplification is to simplify a current input to-be-encoded mesh to a base mesh with relatively few points and faces, while preserving a shape of an original mesh as much as possible. The focus of mesh simplification lies in simplification operations and corresponding error metrics. One feasible mesh simplification operation is, as shown in FIG. 4, merging vertices at both ends of an edge into one vertex and deleting a connection between the two vertices.

Repeating this process throughout the mesh according to specific rules reduces the number of faces and vertices in the mesh to a target value.

In the simplification process, an error metric can be selected to optimize a simplification result. For example, a sum of equation coefficients of all adjacent faces of a vertex can be selected as an error metric of the vertex, and an error metric of the corresponding edge is a sum of error metrics of the two vertices on the edge. In other words, an error caused by merging an edge is a sum of distances from the merged vertex to all planes adjacent to the original two vertices of the edge.

After the simplification operation and the corresponding error metrics are determined, the mesh simplification is performed iteratively. First, the vertex errors of the original mesh are calculated to obtain the error of each edge. Then, the edges are arranged in ascending order of errors, and an edge with the smallest error is selected for merging each time. In addition, a position of the merged vertex is calculated, and errors of all edges related to the merged vertex are updated. That is, the order of edge arrangement is updated to ensure that each iteration is based on a global error metric. Through iteration, the faces of the mesh are simplified to the number required for lossy encoding.

The mesh parameterization is mainly to regenerate texture coordinates for the simplified mesh to obtain the first mesh. The specific algorithm for mesh parameterization can be set according to actual needs, such as the Isocharts algorithm, where the algorithm uses spectral analysis to achieve stretch-driven three-dimensional mesh parameterization, and the three-dimensional mesh is unfolded, sliced and packaged into the two-dimensional texture domain by UV.

Subdivision is applied to the input 3D mesh to generate displacement vector information. An input 2D curve (represented by a 2D polyline), referred to as an "original" curve, is first downsampled to generate a basic curve/polyline, referred to as a "simplified" curve. Then a subdivision scheme is applied to the simplified polyline to generate a "subdivision" curve. Subsequently, the subdivided polyline is deformed to obtain a better approximation of the original curve. That is, a geometric displacement vector is calculated for each vertex of the subdivision mesh, so that the shape of the subdivision curve is as close as possible to the shape of the original curve. These geometric displacement vectors are the geometric displacement vector information output by the module. The same deformation process is also applied to attribute information corresponding to the vertices to obtain corresponding attribute displacement vectors.

Subdivision deformation processing takes the parameterized mesh as input. In this step, the input mesh is subdivided first, and the subdivision scheme can be arbitrarily selected. One possible scheme is a midpoint subdivision scheme, which subdivides each triangle into four sub-triangles in each subdivision iteration, as shown in FIG. 5. New vertices are introduced in the middle of each edge, and subdivision of geometric information and attribute information is performed independently because connectivity of geometric information and attribute information is usually different.

Optionally, the way to calculate the position $Pos(v_{12})$ of the midpoint $v_{12}$ of the newly introduced edge $(v_1, v_2)$ is shown in Formula (1):

$$Pos(v_{12}) = \frac{1}{2}\big(Pos(v_1) + Pos(v_2)\big) \ (1);$$

where $Pos(v_1)$ is geometric coordinates of a vertex $v_1$, and $Pos(v_2)$ is geometric coordinates of a vertex $v_2$.

For a subdivision mesh, the nearest neighboring point (including points on the faces of the original mesh) of each point on the original input mesh is found, and the search can be accelerated through data structures such as kdTree. A displacement vector of geometric coordinates of each vertex of the subdivision mesh is obtained by calculating a distance between each vertex on the subdivision mesh and geometric coordinates of its nearest neighboring point on the original input mesh. The module transmits the generated displacement vector to a subsequent module for encoding.

For the generated displacement vector, it is in a same global coordinate system as the input mesh. One possible optimization method is to convert it to a local coordinate system, where the local coordinate system of each vertex is defined by a normal vector of the vertex on the subdivision mesh. The advantage of this method is that the normal component of the geometric displacement vector contributes more to the quality of the reconstructed mesh than the two tangential components, so larger quantization parameters can be set for the tangential components.

Compressing encoding processing on the base mesh can be understood as inputting the base mesh (that is, the second mesh) into a base mesh compression module for compression encoding. There are mainly two different modes of compression encoding, namely intra-frame mode and inter-frame mode. In intra-frame mode, the base mesh compression module encodes and reconstructs the input three-dimensional mesh with an existing static mesh encoder. In the inter-frame mode, the base mesh compression module calculates motion vectors between vertices of the input mesh and vertices of a reference frame mesh, then encodes the motion vectors, and reconstructs a current frame base mesh based on the reconstructed motion vectors and the reference frame mesh. The base mesh compression module outputs a compressed bitstream and sends the reconstructed base mesh as an output to a displacement order adjustment module, and the displacement order adjustment module adjusts the vertex displacements of the reconstructed base mesh based on the displacement information to obtain first vertex displacements.

For displacement encoding, the embodiments of this application provide two encoding modes, namely a video encoding mode and an entropy encoding mode.

Optionally, in the embodiments of this application, any video encoder may be used to encode the first vertex displacements, and in this case, type information of the video encoder needs to be encoded in the assistance information. Alternatively, any entropy encoding algorithm, such as context-based adaptive binary arithmetic coding (Context-based Adaptive Binary Arithmetic Coding, CABAC), may be used to encode the first vertex displacements. In addition, since statistical characteristics may vary across different levels of displacements and different components, assigning different contexts for entropy encoding to each subdivision level or different components may achieve better performance.

Optionally, the target identification information may implicitly or explicitly indicate the encoding mode of the displacement bitstream.

In the embodiments of this application, because the target identification information is set in the target bitstream to indicate the encoding mode of the displacement bitstream, different displacement encoding modes can be used for displacement encoding according to different requirements, thereby improving flexibility of displacement encoding.

Optionally, in some embodiments, in a case that the encoding mode is the entropy encoding mode, the performing displacement encoding on first vertex displacements to obtain a displacement bitstream includes any one of the following:

performing displacement processing on the first vertex displacements to obtain second vertex displacements, and inputting the second vertex displacements into an entropy encoder to perform displacement encoding to obtain the displacement bitstream; and

inputting the first vertex displacements into the entropy encoder to perform displacement encoding to obtain the displacement bitstream.

In this embodiment of this application, the displacement processing includes wavelet transform and coefficient quantization. It should be understood that when the displacement encoding mode is a video encoding mode, the corresponding displacement processing also includes two-dimensional arrangement, that is, arranging the quantized coefficients into a two-dimensional image, and finally encoding the two-dimensional image using a video encoder to obtain a displacement bitstream.

Optionally, one optional arrangement method is as follows: traverse the wavelet coefficients in order from low frequency to high frequency.

Optionally, for each coefficient, an index (for example, N=M=16) of a pixel block in which the coefficient is located is determined, where the coefficient needs to be stored in the pixel block according to a raster scanning order of the pixel block.

Optionally, a position of a corresponding NxM pixel block on the image can be calculated according to a Morton (Morton) order.

It should be understood that the embodiments of this application are not limited to a specific arrangement mode, and other arrangement modes such as zigzag order or raster order may also be used. The encoder may explicitly specify the corresponding arrangement mode in the bitstream.

It should be noted that in this embodiment of this application, displacement processing can be performed, or displacement encoding can be performed directly without displacement processing. Performing displacement processing can improve the compression efficiency of subsequent displacement encoding, thereby reducing the size of the target bitstream.

Optionally, in some embodiments, the generating a target bitstream based on a to-be-encoded texture map corresponding to the to-be-encoded mesh, the base mesh bitstream, and the displacement bitstream includes:

encoding assistance information to obtain an atlas bitstream, where the assistance information is used for assisting a decoding end in decoding;

performing texture conversion to obtain a target texture map based on a to-be-encoded texture map corresponding to the to-be-encoded mesh and the to-be-encoded mesh, and perform compression encoding on the target texture map to obtain a texture map bitstream; and

multiplexing the base mesh bitstream, the displacement bitstream, the atlas bitstream, and the texture map bitstream to obtain the target bitstream.

In this embodiment of this application, displacement reconstruction can be performed based on the displacement bitstream to obtain reconstructed displacements, deformed mesh reconstruction can be performed based on the reconstructed displacements and the reconstructed base mesh to obtain a reconstructed deformed mesh, then texture map conversion can be performed on the to-be-encoded texture map based on the reconstructed deformed mesh and the to-be-encoded mesh to obtain a target texture map, followed by compression encoding of the target texture map to obtain a texture map bitstream. Finally, the base mesh bitstream, the displacement bitstream, the atlas bitstream, and the texture map bitstream are multiplexed to obtain the target bitstream.

Optionally, in some embodiments, the assistance information includes at least one of the following: first encoding information corresponding to the base mesh bitstream, second encoding information corresponding to the texture map bitstream, an encoding mode of the displacement bitstream, and a processing parameter for displacement processing of the first vertex displacement.

In this embodiment of this application, the first encoding information may include information such as an encoder type, the second encoding information may include information such as the encoder type, and the encoding mode of the displacement bitstream may be video encoding mode or entropy encoding mode. The processing parameter may include at least one of a transformation parameter, a quantization parameter, and an arrangement parameter.

Optionally, transform can be applied to the displacement vectors to reduce the correlation between their data. One optional transform is linear wavelet transform, with its prediction process defined as shown in Equation (2):

$$Signal(v) \leftarrow Signal(v) - \frac{1}{2}\big(Signal(v_1) + Signal(v_2)\big) \ (2);$$

where v is a newly inserted midpoint on the edge $(v_1, v_2)$, Signal(v) is a displacement vector corresponding to the vertex v, Signal($v_1$) is a displacement vector corresponding to the vertex $v_1$, and Signal($v_2$) is a displacement vector corresponding to the vertex $v_2$. The displacement vector of the vertex v is predicted and then updated, with the update process defined as shown in Equation (3):

$$Signal(v) \leftarrow Signal(v) + \frac{1}{8}\sum_{w \in v^*} Signal(w) \ (3);$$

where $v^*$ is a set of all adjacent vertices of the vertex v. The transformed displacement vector is referred to as wavelet coefficient.

Optionally, the transformed displacement vector, that is, the wavelet coefficient, can be quantized in various manners, one of which is shown in Equations (4) and (5):

$$disp[v].d[k] = floor(disp[v].d[k] * scale[k]) \ (4);$$

$$scale[k] = 2^{\wedge}\left(16 - bitDepthPosition + \frac{(4 - qp[k])}{6}\right) \ (5);$$

where disp[v] indicates a transformed value of the displacement vector of the v-th vertex, d[k] indicates the k-th value of the displacement vector, and floor indicates floor rounding. bitDepthPosition indicates a bit depth of a geometric position of a current mesh vertex, and qp[k] indicates a quantization parameter of the k-th coefficient. As mentioned earlier, after the displacement vectors are converted to a coordinate system, the normal components thereof have more significant impact on quality compared to the tangential components, so larger quantization parameters can be used for the tangential components.

In addition, based on the characteristics of the wavelet transform, different quantization parameters can be used for newly generated vertices from subdivision processing and existing vertices. That is, for the vertices after subdivision processing, the quantization parameter is updated as shown in Equation (6):

$$disp[v].d[k] = floor(disp[v].d[k] * scale[k]) \ (6);$$

where lodScale[k] indicates a coefficient of a quantization parameter for a current subdivision level.

Optionally, in some embodiments, after displacement decoding is performed to obtain displacements, displacement vectors consistent with those at the encoding end can be obtained by inverse quantization (that is, inverse coefficient quantization) and inverse transform (that is, inverse wavelet quantization). After reconstructed geometric displacement vectors are obtained, the reconstructed base mesh is subjected to subdivision processing, and the reconstructed deformed mesh after subdivision and deformation processing is obtained based on the corresponding displacement vectors, which is then passed to the texture map conversion module. The texture map conversion module performs texture map conversion based on the input original mesh (that is, the to-be-encoded mesh), the input original texture map (that is, the to-be-encoded texture map), and the reconstructed deformed mesh. Specifically, the texture map conversion may include the following steps:

calculate texture coordinates for each pixel on a to-be-generated target texture map, for example, texture coordinates corresponding to the pixel A(i, j) are P(u, v);

determine whether the texture coordinates are within a triangular face of a parameterized subdivided deformed mesh; and

if the texture coordinates do not belong to any triangular face, mark the pixel as an empty pixel, which may later be filled using a filling algorithm; or

if the texture coordinates belong to one triangular face, perform a target operation.

The target operation may include:

marking the pixel as filled;

calculating barycentric coordinates of the texture coordinates within the current triangular face;

mapping two-dimensional texture coordinates to three-dimensional geometric coordinates based on the barycentric coordinates and the corresponding triangular face, that is, map to a point on the subdivided deformed mesh corresponding to the texture coordinates, as shown by M(x, y, z) in the figure;

finding a point closest to the three-dimensional coordinates on the input original mesh, as shown by M'(x, y, z) in the figure;

calculating the barycenter coordinate of the three-dimensional coordinate according to the triangle where it is located and map it to two dimensions, and calculate its texture coordinate, namely P'(u', v');

sampling the input original texture map using the texture coordinates to obtain a value A'(i', j') of a corresponding pixel position; and

assigning the value to the corresponding pixel A(i, j) on the to-be-generated target texture map.

Optionally, after the converted texture map is obtained, empty pixels can be filled using a related filling algorithm (such as Push-Pull algorithm). Then, existing video encoders such as H.264/AVC, H.265/HEVC, and H.266/VVC can be used to encode the texture map to obtain the output texture map bitstream. In addition, operations such as color space conversion and chroma subsampling can be selectively applied to achieve better rate-distortion performance in video encoding, for example, color space conversion from RGB 444 to YUV420.

It should be noted that the position of the target identification information in the target bitstream can be set according to actual needs. For example, in some embodiments, the target bitstream includes an atlas bitstream determined based on assistance information, the target identification information is part information in the atlas bitstream, and the assistance information is used to assist a decoding end in decoding. In other words, the target bitstream includes an atlas bitstream, and the atlas bitstream includes target identification information.

In this embodiment of this application, based on the V3C syntax structure, a V3C parameter set can be extended to specify parameters commonly used in the sequence, and parameters indicating the mesh displacement encoding mode can be defined in the parameter set, as specifically shown in Table 1 below.

Table 1

| vps_v3c_vmesh_extension (V3C payload in bytes){ | **Descriptor** |
|---|---|
| for(j=0; j<atlas_count_minus1+1; j++){ | |
| ... | |
| **vps_ext_disp_video_codec_id**[ j ] | u(8) |
| ... | |
| } | |
| } | |

**vps_ext_disp_video_codec_id[ j ]** indicates a type of a displacement encoder used by a mesh corresponding to the atlas (corresponding to one or more three-dimensional mesh frames) with index j. If its value is 0, it indicates that the displacement uses an entropy encoding mode, meaning the displacement bitstream needs to be decoded by an entropy decoder; and a value greater than 0 indicates use of a video encoder, with a specific type of a video encoder being specified by a corresponding value.

Optionally, in some embodiments, the target identification information is information used to indicate functions and algorithms that a decoding end needs to support.

In this embodiment of this application, the target identification information can be understood as a profile identifier (ID), that is, the target identification information is carried in a header field of the target bitstream. In other words, the encoding mode of the displacement bitstream can be implicitly indicated through different profile IDs. Specifically, a manner of indicating the displacement encoding method through profile IDs is as shown in Table 2 below.

**Table 2**

| profile_tier_level( ) { | Descriptor |
|---|---|
| **ptl_tier_flag** | u(1) |
| **ptl_profile_codec_group_idc** | u(7) |
| **ptl_profile_toolset_idc** | u(8) |
| **ptl_profile_reconstruction_idc** | u(8) |
| **ptl_reserved_zero_16bits** | u(16) |
| **ptl_max_decodes_idc** | u(4) |
| **ptl_reserved_0xfff_12bits** | u(12) |
| **ptl_level_idc** | u(8) |
| **ptl_num_sub_profiles** | u(6) |
| **ptl_extended_sub_profile_flag** | u(1) |
| for( i = 0; i < ptl_num_sub_profiles; i++ ) | |
| **ptl_sub_profile_idc**[ i ] | u(v) |
| **ptl_toolset_constraints_present_flag** | u(1) |
| if( ptl_toolset_constraints_present_flag ) | |
| profile_toolset_constraints_information( ) | |
| } | |

**ptl_profile_toolset_idc** is defined in profile_tier_level () of the V3C parameter set, which is used to indicate the decoding tools supported by the bitstream that references the V3C parameter set. Using Table 3 as an example, if its value is 0, it indicates that the value of the vps_ext_disp_video_code_flag parameter can only be 0; if its value is 1, it indicates that the value of vps_ext_disp_video_code_flag can be greater than 0, meaning support for using different encoders.

**Table 3**

| Syntax element | Profile name | |
|---|---|---|
| | Basic VDMC | Extended VDMC |
| ptl_profile_toolset_idc | 0 | 1 |
| vps_ext_disp_code_id | 0 | $\geq 0$ |

Optionally, in some embodiments, the target bitstream includes an atlas bitstream, and the atlas bitstream includes at least one of the following:

first field information, where the first field information is used to indicate the number of first vertices;
second field information, where the second field information is used to indicate whether an absolute value of the k-th component of a first displacement is equal to 0;
third field information, where the third field information is used to indicate whether the k-th component of the first displacement is greater than 0;
fourth field information, where the fourth field information is used to indicate whether the absolute value of the k-th component of the first displacement is greater than 1; and
fifth field information, where the fifth field information is used to indicate a value obtained by subtracting a first preset value from the k-th component of the first displacement; where
the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

Optionally, the first preset value can be set according to actual needs, for example, in some embodiments, the first preset value can be 2.

In this embodiment of this application, because a V3C structure takes patch as a basic data description unit, one sub-mesh (that is, the first mesh) corresponds to one patch, a tile is a unit that can be independently encoded and decoded, and one tile may include one or more patches, that is, one tile may correspond to one or more sub-meshes, where the sub-mesh is obtained by dividing an original input mesh. Therefore, a displacement corresponding to a vertex in the sub-mesh is also described in the unit of patch, and possible syntax structure examples are shown in Table 4.

**Table 4**

| patch_data_unit(patchIdx) { | Descripto r |
|---|---|
| **pdu_vertex_count_minus1[** tileID ][ patchIdx ] | ue(v) |
| ... | |
| for( v = 0; v < pdu_vertex_count_minus1[ tileID ][ patchIdx ]+1; v++ ) { | |
| for( k = 0; k < 3; k++ ) { | |
| **pdu_disp_abs_gt0[** tileID ][ patchIdx ][ v ][ k ] | ae(v) |
| if (pdu_disp_abs_gt0[ tileID ][ patchIdx ][ v ][ k ]) { | |
| **pdu_disp_sign[** tileID ][ patchIdx ][ v ][ k ] | ae(v) |
| **pdu_disp_abs_gt1**[ tileID ][ patchIdx ][ v ][ k ] | ae(v) |
| if (pdu_disp_abs_gt1[ v ][ k ]) | |
| **pdu_disp_abs_rem**[ tileID ][ patchIdx ][ v ][ k ] | se(v) |
| } | |
| } | |
| } | |
| ... | |
| } | |

**pdu_vertex_count_minus1**[tileID][patchIdx] indicates the number of vertices of a sub-mesh corresponding to a patch with an index patchIdx in a tile with an index tileID.

**pdu_disp_abs_gt0**[tileID][patchIdx][v][k] indicates whether an absolute value of the k-th component of a displacement (or the coefficient after transform and quantization, or the like) corresponding to the v-th vertex of the sub-mesh corresponding to the patch with the index patchIdx in the tile with the index tileID is equal to 0, where a value of 1 indicates that the value is greater than 0, and a value of 0 indicates that it is equal to 0.

**pdu_disp_sign**[tileID][patchIdx][v][k] indicates whether the k-th component of the displacement (or the coefficient after transform and quantization, or the like) corresponding to the v-th vertex of the sub-mesh corresponding to the patch with the index patchIdx in the tile with the index tileID is greater than 0, where a value of 1 indicates that the value is greater than 0, a value of 0 indicates that the value is less than 0, and if not specified, its value is 1.

pdu_disp _abs_gt1[tileID][patchIdx][v][k] indicates whether an absolute value of the k-th component of the displacement (or the coefficient after transform and quantization, or the like) corresponding to the v-th vertex of the sub-mesh corresponding to the patch with the index patchIdx in the tile with the index tileID is greater than 1, where a value of 1 indicates that the value is greater than 1, a value of 0 indicates that the value is less than 1, and if not specified, its value is 0.

**pdu_disp_abs_rem**[tileID][patchIdx][v][k] indicates a value obtained by subtracting 2 from the k-th component of the displacement (or the coefficient after transform and quantization, or the like) corresponding to the v-th vertex of the sub-mesh corresponding to the patch with the index patchIdx in the tile with the index tileID, and if not specified, its value is 0.

In this embodiment of this application, **pdu_vertex_count_minus1**[tileID][patchIdx] can be understood as the first field information; **pdu_disp_abs_gt0**[tileID][patchIdx][v][k] can be understood as the second field information; **pdu_disp_sign**[tileID][patchIdx][v][k] can be understood as the third field information; **pdu_disp_abs_gt1**[tileID] [patchIdx][v][k] can be understood as the fourth field information; and **pdu_disp_abs_rem**[tileID][patchIdx][v][k] can be understood as the fifth field information.

It should be noted that, in this embodiment of this application, the final displacement (or corresponding quantization coefficient) is obtained based on the foregoing parameters: vectexDisp[tileID][patchIdx][v][k] = (pdu_disp_sign[tileID][patchIdx][v][k] ?1:-1)* (pdu_disp_abs_gt0[tileID][patchIdx] [v] [k] + pdu_disp _abs_gt1[tileID] [patchIdx][v][k] + pdu_disp_abs_rem[tileID][patchIdx][v][k] ).

Optionally, in some embodiments, the target bitstream includes an atlas bitstream, and the atlas bitstream includes at least one of the following:

first field information, where the first field information is used to indicate the number of first vertices;

sixth field information, where the sixth field information is used to indicate the number of subdivision processing iterations for one first mesh in one encoding unit;

seventh field information, where the seventh field information is used to indicate the number of second vertices;

eighth field information, where the eighth field information is used to indicate whether an absolute value of the k-th component of a second displacement is greater than 0;

ninth field information, where the ninth field information is used to indicate whether the k-th component of the second displacement is greater than 0;

tenth field information, where the tenth field information is used to indicate whether the absolute value of the k-th component of the second displacement is greater than 1; and

eleventh field information, where the eleventh field information is used to indicate a value obtained by subtracting a second preset value from the k-th component of the second displacement; where

the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

Optionally, the second preset value can be set according to actual needs, for example, in some embodiments, the second preset value can be 2.

In this embodiment of this application, considering that a displacement is generated through subdivision processing and deformation processing, each subdivision processing may generate a new vertex, and a displacement of the newly generated vertex may have different statistical characteristics from a displacement of an original vertex. In entropy encoding, considering the statistical characteristics between different levels of displacement, different entropy encoding modes and different context information can be adopted according to levels. Besides hierarchical division, the three components of a displacement can be encoded by different entropy encoders based on their respective statistical characteristics.

Optionally, entropy encoding modes for displacements of different subdivision levels are shown in Table 5.

**Table 5**

| patch_data_unit(patchIdx) { | **Descriptor** |
|---|---|
| **pdu_vertex_count_minus1**[ tileID ][ patchIdx ] | ue(v) |
| **pdu_subdiv_iteration_count[** tileID ][ patchIdx ] | u(8) |
| ... | |
| for( j = 0; j < pdu_subdiv_iteration_count[ tileID ][ patchIdx ]+1; j++ ){ | |
| **pdu_sub_vertex_count_minus1**[ tileID ][ patchIdx ][ j ] | ue(v) |
| for( v = 0; v < pdu_sub_vertex_count_minus1[ tileID ][ patchIdx ][ j ]+1; v++ ) { | |
| for( k = 0; k < 3; k++) { | |
| **pdu_disp_abs_gt0**[ tileID ][ patchIdx ][ j ][ v ][ k ] | ae(v) |
| if (pdu_disp_abs_gt0[ tileID ][ patchIdx ] [ j ] [ v ][ k ]) { | |
| **pdu_disp_sign[** tileID ][ patchIdx ] [ j ] [v][k] | ae(v) |

(continued)

| | |
|---|---|
| **pdu_disp_abs_gt1**[ tileID ][ patchIdx ] [ j ] [ v ][ k ] | ae(v) |
| if (pdu_disp_abs_gt1[ tileID ][ patchIdx ] [ j ] [ v ][ k ]) | |
| **pdu_disp_abs_rem**[ tileID ][ patchIdx ] [ j ][ v ][ k ] | se(v) |
| } | |
| } | |
| } | |
| } | |
| ... | |
| } | |

**pdu_vertex_count_minus1**[tileID][patchIdx] indicates the number of vertices of a sub-mesh corresponding to a patch with an index patchIdx in a tile with an index tileID.

**pdu_subdiv_iteration_count**[ tileID ][ patchIdx ] indicates the number of subdivision processing iterations for the sub-mesh corresponding to the patch with the index patchIdx in the tile with the index tileID.

**pdu_sub_vertex_count_minus1**[ tileID ][ patchIdx ][ j ] indicates the number of newly generated vertices from the j-th subdivision processing of the sub-mesh corresponding to the patch with the index patchIdx in the tile with the index tileID.

**pdu_disp_abs_gt0**[tileID][patchIdx][j][v][k] indicates whether an absolute value of the k-th component of a displacement (or the coefficient after transform and quantization, or the like) corresponding to the v-th vertex in the newly generated vertices from the j-th subdivision processing of the sub-mesh corresponding to the patch with the index patchIdx in the tile with the index tileID is greater than 0, where a value of 1 indicates that the value is greater than 0, and a value of 0 indicates that it is equal to 0.

**pdu_disp_sign**[ tileID ][ patchIdx ] [ j ][ v ][ k ] indicates whether the k-th component of the displacement (or the coefficient after transform and quantization, or the like) corresponding to the v-th vertex in the newly generated vertices from the j-th subdivision processing of the sub-mesh corresponding to the patch with the index patchIdx in the tile with the index tileID is greater than 0, where a value of 1 indicates that the value is greater than 0, a value of 0 indicates that the value is less than 0, and if not specified, its value is 1.

**pdu_disp _abs_gt1**[ tileID ][ patchIdx ][ j ][ v ][ k ] indicates whether an absolute value of the k-th component of the displacement (or the coefficient after transform and quantization, or the like) corresponding to the v-th vertex in the newly generated vertices from the j-th subdivision processing of the sub-mesh corresponding to the patch with the index patchIdx in the tile with the index tileID is greater than 1, where a value of 1 indicates that the value is greater than 1, a value of 0 indicates that the value is less than 1, and if not specified, its value is 0.

**pdu_disp_abs_rem**[tileID][patchIdx][v][k] indicates a value obtained by subtracting 2 from the k-th component of the displacement (or the coefficient after transform and quantization, or the like) corresponding to the v-th vertex in the newly generated vertices from the j-th subdivision processing of the sub-mesh corresponding to the patch with the index patchIdx in the tile with the index tileID, and if not specified, its value is 0.

In this embodiment of this application, **pdu_vertex_count_minus1**[tileID][patchIdx] can be understood as the first field information; **pdu_subdiv_iteration_count**[tileID][patchIdx] can be understood as the sixth field information; **pdu_sub_vertex_count_minus1**[tileID][patchIdx][j] can be understood as the seventh field information; **pdu_disp_abs_gt0**[tileID][patchIdx][j][v][k] can be understood as the eighth field information; **pdu_disp_sign**[tileID][patchIdx] [j][v][k] can be understood as the ninth field information; **pdu_disp_abs_gt1**[tileID][patchIdx][j][v][k] can be understood as the tenth field information; **pdu_disp_abs_rem**[tileID][patchIdx][j][v][k] can be understood as the eleventh field information.

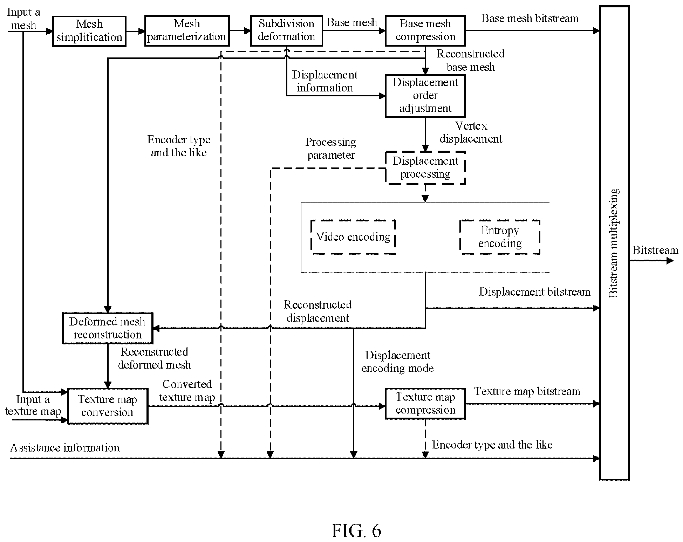

It should be noted that, in this embodiment of this application, the encoding framework at the encoding end is shown in FIG. 6, where the dashed box may represent an optional encoding process. For specific implementation of each encoding process, reference may be made to the foregoing embodiments, and details are not repeated here.

Optionally, an embodiment of this application further provides an encoding processing method, applied to an encoding end and including:

determining a base mesh bitstream based on a to-be-encoded mesh; and

performing displacement encoding on first vertex displacements to obtain a displacement bitstream, where a mode of the displacement encoding is an entropy encoding mode.

In this embodiment of this application, efficiency of displacement encoding can be improved because the entropy encoding mode is adopted to encode the displacement bitstream. Specifically, the encoding process may further include texture map encoding and assistance information encoding. That is, the method further includes:

encoding assistance information to obtain an atlas bitstream; and

encoding a to-be-encoded texture map to obtain a texture map bitstream.

For the encoding processes of the texture map encoding and the assistance information encoding, refer to the foregoing embodiments. Details are not described again here.

Optionally, because a V3C structure takes patch as a basic data description unit, one sub-mesh (that is, the first mesh) corresponds to one patch, a tile is a unit that can be independently encoded and decoded, and one tile may include one or more patches, that is, one tile may correspond to one or more sub-meshes, where the sub-mesh is obtained by dividing an original input mesh. Therefore, in this embodiment of this application, a displacement corresponding to a vertex in the sub-mesh is also described in the unit of patch, and possible syntax structure examples are shown in Table 4 above. That is, in an embodiment, the atlas bitstream may include at least one of the following:

first field information, where the first field information is used to indicate the number of first vertices;

second field information, where the second field information is used to indicate whether an absolute value of the k-th component of a first displacement is equal to 0;

third field information, where the third field information is used to indicate whether the absolute value of the k-th component of the first displacement is greater than 0;

fourth field information, where the fourth field information is used to indicate whether the absolute value of the k-th component of the first displacement is greater than 1; and

fifth field information, where the fifth field information is used to indicate a value obtained by subtracting a first preset value from the k-th component of the first displacement; where

the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

Alternatively, considering that a displacement is generated through subdivision processing and deformation processing, each subdivision processing may generate a new vertex, and a displacement of the newly generated vertex may have different statistical characteristics from a displacement of an original vertex. In entropy encoding, considering the statistical characteristics between different levels of displacement, different entropy encoding modes and different context information can be adopted according to levels. Besides hierarchical division, the three components of a displacement can be encoded by different entropy encoders based on their respective statistical characteristics. Entropy encoding modes for displacements of different subdivision levels are shown in Table 5. That is, in an embodiment, the atlas bitstream may include at least one of the following:

first field information, where the first field information is used to indicate the number of first vertices;

sixth field information, where the sixth field information is used to indicate the number of subdivision processing iterations for one first mesh in one encoding unit;

seventh field information, where the seventh field information is used to indicate the number of second vertices;

eighth field information, where the eighth field information is used to indicate whether an absolute value of the k-th component of a second displacement is greater than 0;

ninth field information, where the ninth field information is used to indicate whether the k-th component of the second displacement is greater than 0;

tenth field information, where the tenth field information is used to indicate whether the absolute value of the k-th component of the second displacement is greater than 1; and

eleventh field information, where the eleventh field information is used to indicate a value obtained by subtracting a second preset value from the k-th component of the second displacement; where

the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

Optionally, an embodiment of this application further provides an encoding processing method, applied to a decoding end and including:

obtaining a target bitstream; and
performing entropy decoding on the target bitstream to obtain a vertex displacement.

Optionally, because a V3C structure takes patch as a basic data description unit, one sub-mesh (that is, the first mesh) corresponds to one patch, a tile is a unit that can be independently encoded and decoded, and one tile may include one or more patches, that is, one tile may correspond to one or more sub-meshes, where the sub-mesh is obtained by dividing an original input mesh. Therefore, in this embodiment of this application, a displacement corresponding to a vertex in the sub-mesh is also described in the unit of patch, and possible syntax structure examples are shown in Table 4 above. That is, in an embodiment, the target bitstream further includes an atlas bitstream, and the atlas bitstream may include at least one of the following:

first field information, where the first field information is used to indicate the number of first vertices;
second field information, where the second field information is used to indicate whether an absolute value of the k-th component of a first displacement is equal to 0;
third field information, where the third field information is used to indicate whether the absolute value of the k-th component of the first displacement is greater than 0;
fourth field information, where the fourth field information is used to indicate whether the absolute value of the k-th component of the first displacement is greater than 1; and
fifth field information, where the fifth field information is used to indicate a value obtained by subtracting a first preset value from the k-th component of the first displacement; where
the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

Alternatively, considering that a displacement is generated through subdivision processing and deformation processing, each subdivision processing may generate a new vertex, and a displacement of the newly generated vertex may have different statistical characteristics from a displacement of an original vertex. In entropy encoding, considering the statistical characteristics between different levels of displacement, different entropy encoding modes and different context information can be adopted according to levels. Besides hierarchical division, the three components of a displacement can be encoded by different entropy encoders based on their respective statistical characteristics. Entropy encoding modes for displacements of different subdivision levels are shown in Table 5. That is, in an embodiment, the target bitstream further includes an atlas bitstream, and the atlas bitstream may include at least one of the following:

first field information, where the first field information is used to indicate the number of first vertices;
sixth field information, where the sixth field information is used to indicate the number of subdivision processing iterations for one first mesh in one encoding unit;
seventh field information, where the seventh field information is used to indicate the number of second vertices;
eighth field information, where the eighth field information is used to indicate whether an absolute value of the k-th component of a second displacement is greater than 0;
ninth field information, where the ninth field information is used to indicate whether the k-th component of the second displacement is greater than 0;
tenth field information, where the tenth field information is used to indicate whether the absolute value of the k-th component of the second displacement is greater than 1; and
eleventh field information, where the eleventh field information is used to indicate a value obtained by subtracting a second preset value from the k-th component of the second displacement; where
the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

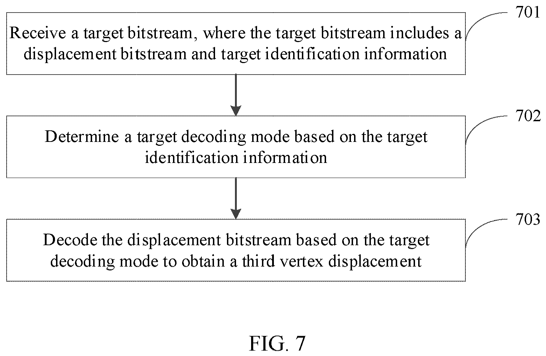

Optionally, an embodiment of this application further provides a decoding processing method. As shown in FIG. 7, the decoding processing method includes:

Step 701: Receive a target bitstream, where the target bitstream includes a displacement bitstream and target identification information, and the target identification information is used to indicate that an encoding mode of the displacement bitstream is a video encoding mode or an entropy encoding mode.

Step 702: Determine a target decoding mode based on the target identification information.

Step 703: Decode the displacement bitstream based on the target decoding mode to obtain a third vertex displacement.

In this embodiment of this application, the target indication information may indicate the encoding mode explicitly or implicitly. Because the encoding mode is indicated by the target indication information, the decoding end can obtain a vertex displacement through decoding by using a corresponding decoding mode, which improves the flexibility of displacement decoding.

Optionally, in some embodiments, in a case that the target decoding mode is an entropy decoding mode, the decoding the displacement bitstream based on the target decoding mode to obtain a third vertex displacement includes any one of the following:

inputting the displacement bitstream into an entropy decoder for decoding to obtain a fourth vertex displacement, and performing displacement reconstruction processing on the fourth vertex displacement to obtain the third vertex displacement; and

inputting the displacement bitstream into the entropy decoder for decoding to obtain the third vertex displacement.

In this embodiment of this application, the displacement reconstruction processing can be understood as a reverse processing process of the foregoing displacement processing, that is, the displacement reconstruction processing includes inverse coefficient quantization and inverse wavelet transform.

Optionally, in some embodiments, the target bitstream further includes a base mesh bitstream and an atlas bitstream, and the method further includes:

decoding the atlas bitstream to obtain assistance information;
decoding the base mesh bitstream based on the assistance information to obtain a reconstructed base mesh;
performing subdivision processing on the reconstructed base mesh based on the assistance information to obtain a reconstructed subdivision mesh; and
performing deformation processing on the reconstructed subdivision mesh based on the third vertex displacement to obtain a target decoding mesh.

Optionally, the assistance information includes at least one of the following: first encoding information corresponding to the base mesh bitstream, an encoding mode of the displacement bitstream, and a processing parameter for displacement processing of a first vertex displacement; where
the first vertex displacement is used for determining the displacement bitstream.

In this embodiment of this application, subdivision processing may be performed on the reconstructed base mesh based on information in the assistance information, such as a subdivision processing scheme or the number of iteration times, to obtain a reconstructed subdivision mesh. After the reconstructed subdivision mesh is obtained, deformed mesh reconstruction may be performed based on the reconstructed subdivision mesh and the third vertex displacement information to obtain a reconstructed deformed mesh, so as to obtain a target decoded mesh.

Optionally, the inputting the displacement bitstream into an entropy decoder for decoding to obtain a fourth vertex displacement, and performing displacement reconstruction processing on the fourth vertex displacement to obtain the third vertex displacement includes:

in a case that assistance information includes a processing parameter for displacement processing of the first vertex displacement, inputting the displacement bitstream into an entropy decoder for decoding to obtain a fourth vertex displacement; and
performing displacement reconstruction processing on the fourth vertex displacement based on the processing parameter to obtain the third vertex displacement; where
the first vertex displacement is used for determining the displacement bitstream.

Optionally, the inputting the displacement bitstream into the entropy decoder for decoding to obtain the third vertex displacement includes:

in a case that the assistance information does not include a processing parameter for displacement processing of the

17

first vertex displacement, inputting the displacement bitstream into the entropy decoder for decoding to obtain the third vertex displacement; where

the first vertex displacement is used for determining the displacement bitstream.

Optionally, the displacement processing includes wavelet transform and coefficient quantization.

Optionally, the target bitstream includes an atlas bitstream determined based on assistance information, the target identification information is part information in the atlas bitstream, and the assistance information is used to assist a decoding end in decoding.

Optionally, the target identification information is information used to indicate functions and algorithms that a decoding end needs to support.

Optionally, the target bitstream further includes an atlas bitstream, and the atlas bitstream includes at least one of the following:

first field information, where the first field information is used to indicate the number of first vertices;
second field information, where the second field information is used to indicate whether an absolute value of the k-th component of a first displacement is equal to 0;
third field information, where the third field information is used to indicate whether the absolute value of the k-th component of the first displacement is greater than 0;
fourth field information, where the fourth field information is used to indicate whether the absolute value of the k-th component of the first displacement is greater than 1; and
fifth field information, where the fifth field information is used to indicate a value obtained by subtracting a first preset value from the k-th component of the first displacement; where
the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

Optionally, the target bitstream further includes an atlas bitstream, and the atlas bitstream includes at least one of the following:

first field information, where the first field information is used to indicate the number of first vertices;
sixth field information, where the sixth field information is used to indicate the number of subdivision processing iterations for one first mesh in one encoding unit;
seventh field information, where the seventh field information is used to indicate the number of second vertices;
eighth field information, where the eighth field information is used to indicate whether an absolute value of the k-th component of a second displacement is greater than 0;
ninth field information, where the ninth field information is used to indicate whether the k-th component of the second displacement is greater than 0;
tenth field information, where the tenth field information is used to indicate whether the absolute value of the k-th component of the second displacement is greater than 1; and
eleventh field information, where the eleventh field information is used to indicate a value obtained by subtracting a second preset value from the k-th component of the second displacement; where
the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

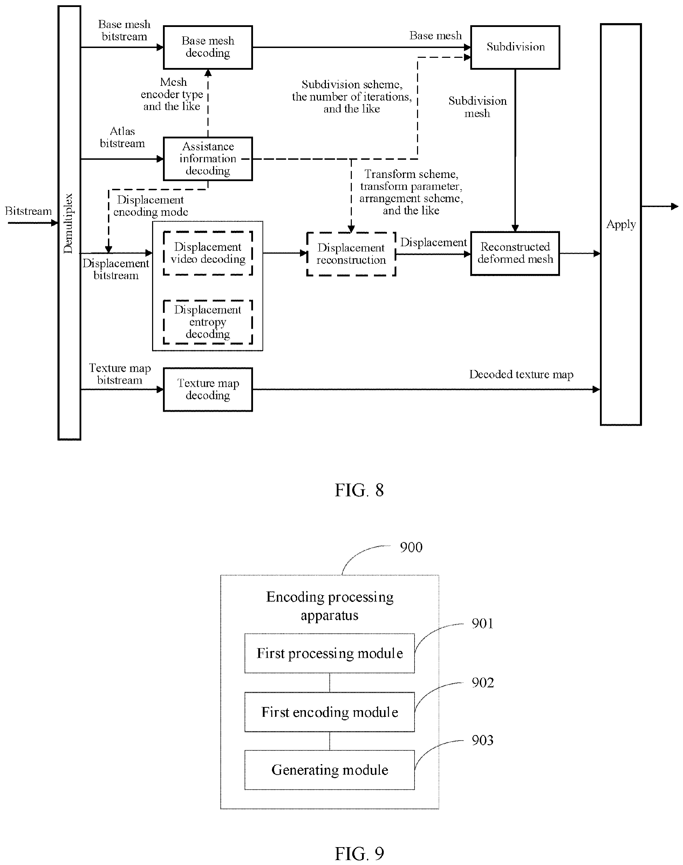

It should be noted that in this embodiment of this application, the decoding frame of the decoding end is shown in FIG. 8, in which the dotted box can be represented as an optional decoding procedure. The following describes in detail the decoding procedure.

1. Decoding of assistance information
The decoding end first determines a decoding scheme based on the assistance information, which mainly includes a displacement encoding mode, indicating whether a displacement is encoded by a video encoder or the entropy encoder; a static mesh encoder type, indicating the decoding end to use a corresponding static mesh decoder; a video encoder type, guiding the decoding end to use a corresponding video decoder; and a subdivision processing scheme, namely, a subdivision processing scheme for the base mesh during deformed mesh reconstruction, where the subdivision processing scheme of the encoding end needs to be consistent with that of the decoding end. There are also optional spatial displacement transformation schemes and coefficient arrangement schemes, or the like.

2. Decoding of a base mesh. Decoding of the base mesh may be divided into intra-frame mode and inter-frame mode. In the intra-frame mode, the module decodes an input base mesh bitstream through a decoder corresponding to a static mesh encoder indicated by the assistance information, and the decoded output is a three-dimensional mesh, including geometric information, a connection relationship, texture coordinate information, and the like. In the inter-frame mode, the module is responsible for decoding a motion vector corresponding to a vertex, and then reconstructing a base mesh of a current frame based on a reference frame.

3. Displacement decoding. In the process of displacement decoding, it is necessary to determine a displacement decoding mode based on an assistance information identifier. If the assistance information indicates encoding displacement information using a video encoder, the decoding end calls the corresponding video decoder to decode a displacement bitstream; or if the assistance information indicates encoding the displacement information using an entropy encoder, the entropy decoder is directly used for decoding.

For decoded displacement information, displacement vectors corresponding to vertices of a reconstructed subdivision mesh need to be obtained through displacement reconstruction. The operation of displacement reconstruction is mainly to perform inverse quantization and inverse transform on the decoded displacement information, that is, wavelet coefficients, based on quantization parameters and transformation parameters indicated by the assistance information. For information of video decoding, corresponding displacement information needs to be taken out from a two-dimensional image based on an arrangement manner of the encoding end.

4. Subdivision processing. The subdivision processing operation is the same as the subdivision processing operation of the encoding end, and the assistance information indicates a subdivision processing method and the number of iteration times for the base mesh.

5. Reconstruction of a deformed mesh. After the base mesh and the displacement vector are decoded and reconstructed, a deformed mesh is reconstructed based on the two parts. A corresponding displacement vector is added to each vertex of the subdivision mesh, as shown in Equation (7):

$$deformedmesh[i].v[k] = subdivmesh[i].v[k] + displacement[k]$$

(7);

where subdivmesh[i].v[k] indicates geometric coordinates of the k-th vertex of a current frame (with an index of i) after subdivision processing on the base mesh. displacement[k] indicates a spatial displacement vector corresponding to the k-th vertex, and deformedmesh[i].v[k] indicates geometric coordinates of the k-th vertex of the current frame after subdivision processing and deformation processing.

6. Decoding of a displacement map. A texture map decoder is responsible for decoding a texture map bitstream, and the texture map bitstream is decoded by a video decoder indicated in the assistance information. Optional color space conversion is performed to obtain an image format that is consistent with a texture map input by an encoding end, so as to obtain a final decoded texture map.

After the above processes are completed, a final reconstructed target decoding mesh and a corresponding attribute map that are obtained at the decoding end are used as inputs for corresponding processing.

In the encoding processing method provided in this embodiment of this application, the executing subject can be an encoding processing apparatus. In the embodiments of this application, the encoding processing apparatus provided in the embodiments of this application is described by using the encoding processing method being executed by the encoding processing apparatus as an example.

Referring to FIG. 9, an embodiment of this application further provides an encoding processing apparatus. As shown in FIG. 9, the encoding processing apparatus 900 includes:

a first processing module 901, configured to determine a base mesh bitstream based on a to-be-encoded mesh;

a first encoding module 902, configured to perform displacement encoding on first vertex displacements to obtain a displacement bitstream, where the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh; and

a generating module 903, configured to generate a target bitstream based on a to-be-encoded texture map corresponding to the to-be-encoded mesh, the base mesh bitstream, and the displacement bitstream, where the target bitstream includes target identification information, and the target identification information is used to indicate that an encoding mode of the displacement bitstream is a video encoding mode or an entropy encoding mode.

Optionally, in a case that the encoding mode is the entropy encoding mode, the first encoding module 902 is specifically configured to perform any one of the following:

performing displacement processing on the first vertex displacements to obtain second vertex displacements, and inputting the second vertex displacements into an entropy encoder to perform displacement encoding to obtain the displacement bitstream; and

inputting the first vertex displacements into the entropy encoder to perform displacement encoding to obtain the displacement bitstream.

Optionally, the displacement processing includes wavelet transform and coefficient quantization.

Optionally, the generating module 903 includes:

an encoding unit, configured to encode assistance information to obtain an atlas bitstream, where the assistance information is used for assisting a decoding end in decoding;

a conversion unit, configured to perform texture conversion to obtain a target texture map based on a to-be-encoded texture map and the to-be-encoded mesh, and perform compression encoding on the target texture map to obtain a texture map bitstream; and

a multiplexing unit, configured to multiplex the base mesh bitstream, the displacement bitstream, the atlas bitstream, and the texture map bitstream to obtain the target bitstream.

Optionally, the assistance information includes at least one of the following: first encoding information corresponding to the base mesh bitstream, second encoding information corresponding to the texture map bitstream, an encoding mode of the displacement bitstream, and a processing parameter for displacement processing of the first vertex displacement.

Optionally, the target bitstream includes an atlas bitstream determined based on assistance information, the target identification information is part information in the atlas bitstream, and the assistance information is used to assist a decoding end in decoding.

Optionally, the target identification information is information used to indicate functions and algorithms that a decoding end needs to support.

Optionally, the target bitstream includes an atlas bitstream, and the atlas bitstream includes at least one of the following:

first field information, where the first field information is used to indicate the number of first vertices;

second field information, where the second field information is used to indicate whether an absolute value of the k-th component of a first displacement is equal to 0;

third field information, where the third field information is used to indicate whether the absolute value of the k-th component of the first displacement is greater than 0;

fourth field information, where the fourth field information is used to indicate whether the absolute value of the k-th component of the first displacement is greater than 1; and

fifth field information, where the fifth field information is used to indicate a value obtained by subtracting a first preset value from the k-th component of the first displacement; where

the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

Optionally, the target bitstream includes an atlas bitstream, and the atlas bitstream includes at least one of the following:

first field information, where the first field information is used to indicate the number of first vertices;

sixth field information, where the sixth field information is used to indicate the number of subdivision processing iterations for one first mesh in one encoding unit;

seventh field information, where the seventh field information is used to indicate the number of second vertices;

eighth field information, where the eighth field information is used to indicate whether an absolute value of the k-th component of a second displacement is greater than 0;

ninth field information, where the ninth field information is used to indicate whether the k-th component of the second displacement is greater than 0;

tenth field information, where the tenth field information is used to indicate whether the absolute value of the k-th component of the second displacement is greater than 1; and

eleventh field information, where the eleventh field information is used to indicate a value obtained by subtracting a second preset value from the k-th component of the second displacement; where

the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

The execution subject of the decoding processing method provided in the embodiments of this application may be a decoding processing apparatus. In the embodiments of this application, the decoding processing apparatus provided in the embodiments of this application is described by using the decoding processing method being executed by the decoding processing apparatus as an example.

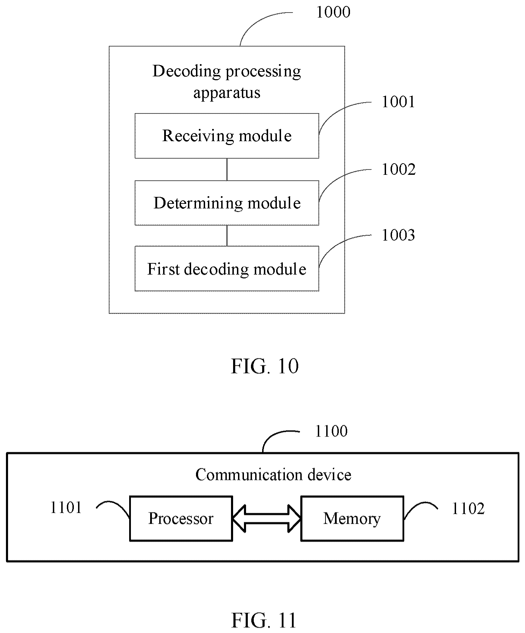

Referring to FIG. 10, an embodiment of this application further provides a decoding processing apparatus. As shown in FIG. 10, the decoding processing apparatus 1000 includes:

a receiving module 1001, configured to receive a target bitstream, where the target bitstream includes a displacement bitstream and target identification information, and the target identification information is used to indicate that an encoding mode of the displacement bitstream is a video encoding mode or an entropy encoding mode;
a determining module 1002, configured to determine a target decoding mode based on the target identification information; and
a first decoding module 1003, configured to decode the displacement bitstream based on the target decoding mode to obtain a third vertex displacement.

Optionally, in a case that the target decoding mode is an entropy decoding mode, the first decoding module 1003 is specifically configured to perform any one of the following:

inputting the displacement bitstream into an entropy decoder for decoding to obtain a fourth vertex displacement, and performing displacement reconstruction processing on the fourth vertex displacement to obtain the third vertex displacement; and
inputting the displacement bitstream into the entropy decoder for decoding to obtain the third vertex displacement.

Optionally, the displacement reconstruction processing includes inverse coefficient quantization and inverse wavelet transform.

Optionally, the target bitstream further includes a base mesh bitstream and an atlas bitstream, and the decoding processing apparatus 1000 further includes a mesh reconstruction module.

The first decoding module 1003 is further configured to decode the atlas bitstream to obtain assistance information.

The reconstruction module is configured to decode the base mesh bitstream based on the assistance information to obtain a reconstructed base mesh; perform subdivision processing on the reconstructed basic mesh based on the assistance information to obtain a reconstructed subdivision mesh; and perform deformation processing on the reconstructed subdivision mesh based on the third vertex displacement to obtain a target decoding mesh.

Optionally, the assistance information includes at least one of the following: first encoding information corresponding to the base mesh bitstream, an encoding mode of the displacement bitstream, and a processing parameter for displacement processing of a first vertex displacement; where

the first vertex displacement is used for determining the displacement bitstream.

Optionally, the first decoding module 1003 is specifically configured to: in a case that assistance information includes a processing parameter for displacement processing of the first vertex displacement, input the displacement bitstream into an entropy decoder for decoding to obtain a fourth vertex displacement; and perform displacement reconstruction processing on the fourth vertex displacement based on the processing parameter to obtain the third vertex displacement; where the first vertex displacement is used for determining the displacement bitstream.

Optionally, the first decoding module 1003 is specifically configured to: in a case that assistance information does not include a processing parameter for displacement processing of the first vertex displacement, input the displacement bitstream into an entropy decoder for decoding to obtain the third vertex displacement; where the first vertex displacement is used for determining the displacement bitstream.

Optionally, the displacement processing includes wavelet transform and coefficient quantization.

Optionally, the target bitstream includes an atlas bitstream determined based on assistance information, the target identification information is part information in the atlas bitstream, and the assistance information is used to assist a decoding end in decoding.

Optionally, the target identification information is information used to indicate functions and algorithms that a decoding end needs to support.

Optionally, the target bitstream further includes an atlas bitstream, and the atlas bitstream includes at least one of the following:

first field information, where the first field information is used to indicate the number of first vertices;
second field information, where the second field information is used to indicate whether an absolute value of the k-th component of a first displacement is equal to 0;
third field information, where the third field information is used to indicate whether the absolute value of the k-th component of the first displacement is greater than 0;
fourth field information, where the fourth field information is used to indicate whether the absolute value of the k-th component of the first displacement is greater than 1; and
fifth field information, where the fifth field information is used to indicate a value obtained by subtracting a first preset value from the k-th component of the first displacement; where
the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

Optionally, the target bitstream further includes an atlas bitstream, and the atlas bitstream includes at least one of the following:

first field information, where the first field information is used to indicate the number of first vertices;
sixth field information, where the sixth field information is used to indicate the number of subdivision processing iterations for one first mesh in one encoding unit;
seventh field information, where the seventh field information is used to indicate the number of second vertices;
eighth field information, where the eighth field information is used to indicate whether an absolute value of the k-th component of a second displacement is greater than 0;
ninth field information, where the ninth field information is used to indicate whether the k-th component of the second displacement is greater than 0;
tenth field information, where the tenth field information is used to indicate whether the absolute value of the k-th component of the second displacement is greater than 1; and
eleventh field information, where the eleventh field information is used to indicate a value obtained by subtracting a second preset value from the k-th component of the second displacement; where
the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

The encoding processing apparatus and the decoding processing apparatus in the embodiments of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The encoding processing apparatus and the decoding processing apparatus in the embodiments of this application are capable of implementing the processes implemented in the method embodiments in FIG. 3 to FIG. 8, with the same technical effects achieved. To avoid repetition, details are not described herein again.

Optionally, an embodiment of this application further provides an encoding processing apparatus, and the encoding processing apparatus includes:

a second processing module, configured to determine a base mesh bitstream based on a to-be-encoded mesh; and
a second encoding module, configured to perform displacement encoding on first vertex displacements to obtain a displacement bitstream, where a mode of the displacement encoding is an entropy encoding mode.

Optionally, the second encoding module is further configured to encode assistance information to obtain an atlas bitstream.

Optionally, the atlas bitstream includes at least one of the following:

first field information, where the first field information is used to indicate the number of first vertices;

second field information, where the second field information is used to indicate whether an absolute value of the k-th component of a first displacement is equal to 0;

third field information, where the third field information is used to indicate whether the absolute value of the k-th component of the first displacement is greater than 0;

fourth field information, where the fourth field information is used to indicate whether the absolute value of the k-th component of the first displacement is greater than 1; and

fifth field information, where the fifth field information is used to indicate a value obtained by subtracting a first preset value from the k-th component of the first displacement; where

the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

Optionally, the atlas bitstream includes at least one of the following:

first field information, where the first field information is used to indicate the number of first vertices;

sixth field information, where the sixth field information is used to indicate the number of subdivision processing iterations for one first mesh in one encoding unit;

seventh field information, where the seventh field information is used to indicate the number of second vertices;

eighth field information, where the eighth field information is used to indicate whether an absolute value of the k-th component of a second displacement is greater than 0;

ninth field information, where the ninth field information is used to indicate whether the k-th component of the second displacement is greater than 0;

tenth field information, where the tenth field information is used to indicate whether the absolute value of the k-th component of the second displacement is greater than 1; and

eleventh field information, where the eleventh field information is used to indicate a value obtained by subtracting a second preset value from the k-th component of the second displacement; where

the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

Optionally, an embodiment of this application further provides a decoding processing apparatus, and the decoding processing apparatus includes:

an obtaining module, configured to obtain a target bitstream; and

a second decoding module, configured to perform entropy decoding on the target bitstream to obtain a vertex displacement.

Optionally, the target bitstream further includes an atlas bitstream, and the atlas bitstream includes at least one of the following:

first field information, where the first field information is used to indicate the number of first vertices;

second field information, where the second field information is used to indicate whether an absolute value of the k-th component of a first displacement is equal to 0;

third field information, where the third field information is used to indicate whether the absolute value of the k-th component of the first displacement is greater than 0;

fourth field information, where the fourth field information is used to indicate whether the absolute value of the k-th component of the first displacement is greater than 1; and

fifth field information, where the fifth field information is used to indicate a value obtained by subtracting a first preset value from the k-th component of the first displacement; where

the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

Optionally, the target bitstream further includes an atlas bitstream, and the atlas bitstream includes:

first field information, where the first field information is used to indicate the number of first vertices;

sixth field information, where the sixth field information is used to indicate the number of subdivision processing iterations for one first mesh in one encoding unit;

seventh field information, where the seventh field information is used to indicate the number of second vertices;

eighth field information, where the eighth field information is used to indicate whether an absolute value of the k-th component of a second displacement is greater than 0;

ninth field information, where the ninth field information is used to indicate whether the k-th component of the second displacement is greater than 0;

tenth field information, where the tenth field information is used to indicate whether the absolute value of the k-th component of the second displacement is greater than 1; and

eleventh field information, where the eleventh field information is used to indicate a value obtained by subtracting a second preset value from the k-th component of the second displacement; where

the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

Optionally, as shown in FIG. 11, an embodiment of this application further provides a communication device 1100, including a processor 1101 and a memory 1102. A program or instructions capable of running on the processor 1101 are stored in the memory 1102. For example, when the communication device 1100 is an encoding end device and when the program or the instructions are executed by the processor 1101, the steps of the foregoing embodiments of the encoding processing method are implemented, with the same technical effects achieved. When the communications device 1100 is a decoding end device and when the program or the instructions are executed by the processor 1101, the processes of the foregoing embodiment of the decoding processing method are implemented, with the same technical effects achieved. To avoid repetition, details are not described herein again.

An embodiment of this application further provides an electronic device, including a processor and a communication interface.

when the electronic device is an encoding end, the processor is configured to determine a base mesh bitstream based on a to-be-encoded mesh; perform displacement encoding on first vertex displacements to obtain a displacement bitstream, where the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh; and generate a target bitstream based on a to-be-encoded texture map corresponding to the to-be-encoded mesh, the base mesh bitstream, and the displacement bitstream, where the target bitstream includes target identification information, and the target identification information is used to indicate that an encoding mode of the displacement bitstream is a video encoding mode or an entropy encoding mode; and

when the electronic device is a decoding end, the communication interface is configured to receive a target bitstream, where the target bitstream includes a displacement bitstream and target identification information, and the target identification information is used to indicate that an encoding mode of the displacement bitstream is a video encoding mode or an entropy encoding mode; and the processor is configured to determine a target decoding mode based on the target identification information; and decode the displacement bitstream based on the target decoding mode to obtain a third vertex displacement;

or,

when the electronic device is an encoding end, the processor is configured to determine a base mesh bitstream based on a to-be-encoded mesh, and perform displacement encoding on first vertex displacements to obtain a displacement bitstream, where a mode of the displacement encoding is an entropy encoding mode; and

when the electronic device is a decoding end, the processor is configured to obtain a target bitstream, and perform entropy decoding on the target bitstream to obtain a vertex displacement.

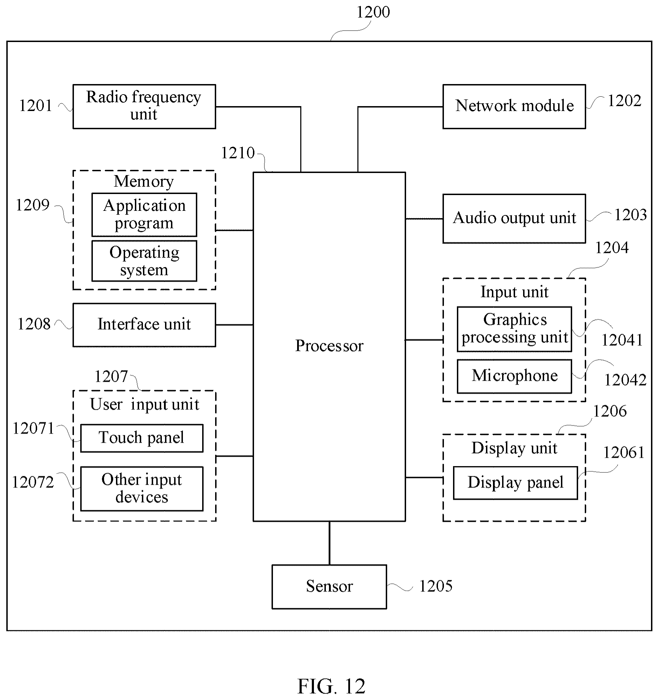

The electronic device embodiment corresponds to the foregoing method embodiments on the encoding/decoding end device side, and the implementation processes and implementations of the foregoing method embodiment can be applied to the electronic device embodiment, with the same technical effects achieved. Specifically, FIG. 12 is a schematic diagram of a hardware structure of an electronic device according to an embodiment of this application.

The electronic device 1200 includes but is not limited to at least part of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Those skilled in the art can understand that the electronic device 1200 may further include a power supply (for example, a battery) that supplies power to various components. The power supply may be logically connected to the processor 1210 through a power management system, so that functions such as charge and discharge management and power consumption management are implemented by using the power management system. The structure of the electronic device shown in FIG. 12 does not constitute a limitation on the electronic device. The electronic device may include more or fewer components than shown in the drawing, or combine some of the components, or arrange the components differently. Details are not described herein.

It can be understood that in this embodiment of this application, the input unit 1204 may include a graphics processing unit (Graphics Processing Unit, GPU) 12041 and a microphone 12042. The graphics processing unit 12041 processes image data of a still picture or video obtained by an image capture apparatus (such as a camera) in a video capture mode or an image capture mode. The display unit 1206 may include a display panel 12061. The display panel 12061 may be configured in a form of a liquid crystal display, an organic light-emitting diode display, or the like. The user input unit 1207 includes at least one of a touch panel 12071 and other input devices 12072. The touch panel 12071 is also referred to as a touchscreen. The touch panel 12071 may include two parts: a touch detection apparatus and a touch controller. The other input devices 12072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 1201 sends the downlink data to the processor 1210 for processing; and the radio frequency unit 1201 also sends uplink data to the network-side device. Generally, the radio frequency unit 1201 includes but is not limited to an antenna, an amplifier, a transceiver, a coupler, a low noise amplifier, a duplexer, and the like.

The memory 1209 may be configured to store software programs or instructions and various data. The memory 1209 may mainly include a first storage area for storing programs or instructions and a second storage area for storing data, where the first storage area may store an operating system, an application program or instructions required by at least one function (for example, an audio playing function and an image playing function), and the like. The memory 1209 may include a volatile memory or a non-volatile memory, or the memory 1209 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, SRAM), a static RAM (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1209 described in the embodiments of this application is intended to include but is not limited to these and any other suitable types of memories.

The processor 1210 may include one or more processing units. Optionally, the processor 1210 may integrate an application processor and a modem processor. The application processor primarily processes operations involving an operating system, user interface, application program, or the like. The modem processor primarily processes radio communication, for example, being a baseband processor. It can be understood that the modem processor may alternatively be not integrated in the processor 1210.

When the electronic device is an encoding end, the processor 1210 is configured to determine a base mesh bitstream based on a to-be-encoded mesh; perform displacement encoding on first vertex displacements to obtain a displacement bitstream, where the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh; and generate a target bitstream based on a to-be-encoded texture map corresponding to the to-be-encoded mesh, the base mesh bitstream, and the displacement bitstream, where the target bitstream includes target identification information, and the target identification information is used to indicate that an encoding mode of the displacement bitstream is a video encoding mode or an entropy encoding mode.

when the electronic device is a decoding end, the radio frequency unit 1201 is configured to receive a target bitstream, where the target bitstream includes a displacement bitstream and target identification information, and the target identification information is used to indicate that an encoding mode of the displacement bitstream is a video encoding mode or an entropy encoding mode; and the processor 1210 is configured to determine a target decoding mode based on the target identification information; and decode the displacement bitstream based on the target decoding mode to obtain a third vertex displacement;

or,

when the electronic device is an encoding end, the processor 1210 is configured to determine a base mesh bitstream based on a to-be-encoded mesh, and perform displacement encoding on first vertex displacements to obtain a displacement bitstream, where a mode of the displacement encoding is an entropy encoding mode; and

when the electronic device is a decoding end, the processor 1210 is configured to obtain a target bitstream, and perform entropy decoding on the target bitstream to obtain a vertex displacement.

An embodiment of this application further provides a readable storage medium, where the readable storage medium stores a program or instructions, and when the program or the instructions are executed by a processor, the processes of the foregoing embodiments of the encoding processing method or decoding processing method are implemented, with the same technical effects achieved. To avoid repetition, details are not described herein again.

The processor is the processor in the electronic device in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing embodiments of the encoding processing method or decoding processing method, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the encoding processing method or decoding processing method, with the same technical effects achieved. To avoid repetition, details are not repeated herein.

An embodiment of this application further provides a video encoding and decoding system, which includes an encoding end device and a decoding end device, where the encoding end device is configured to execute the processes of the method embodiments of the encoding end device as shown in FIG. 3, and the decoding end device is configured to execute the processes of the method embodiments of the decoding end device as shown in FIG. 7, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a ..." does not preclude the presence of other identical elements in the process, method, article, or apparatus that includes the element. Furthermore, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. An encoding processing method, applied to an encoding end and comprising:

    determining a base mesh bitstream based on a to-be-encoded mesh;
    performing displacement encoding on first vertex displacements to obtain a displacement bitstream, wherein the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh; and
    generating a target bitstream based on a to-be-encoded texture map corresponding to the to-be-encoded mesh, the base mesh bitstream, and the displacement bitstream, wherein the target bitstream comprises target identification information, and the target identification information is used to indicate that an encoding mode of the displacement bitstream is a video encoding mode or an entropy encoding mode.

2. The method according to claim 1, wherein in a case that the encoding mode is the entropy encoding mode, the performing displacement encoding on first vertex displacements to obtain a displacement bitstream comprises any one of the following:

    performing displacement processing on the first vertex displacements to obtain second vertex displacements, and inputting the second vertex displacements into an entropy encoder to perform displacement encoding to obtain the displacement bitstream; and
    inputting the first vertex displacements into the entropy encoder to perform displacement encoding to obtain the displacement bitstream.

3. The method according to claim 2, wherein the displacement processing comprises wavelet transform and coefficient quantization.

4. The method according to any one of claims 1 to 3, wherein the target bitstream comprises an atlas bitstream determined based on assistance information, the target identification information is part information in the atlas bitstream, and the assistance information is used to assist a decoding end in decoding.

5. The method according to any one of claims 1 to 3, wherein the target identification information is information used to indicate functions and algorithms that a decoding end needs to support.

6. The method according to any one of claims 1 to 5, wherein the target bitstream comprises an atlas bitstream, and the atlas bitstream comprises at least one of the following:

    first field information, wherein the first field information is used to indicate the number of first vertices;
    second field information, wherein the second field information is used to indicate whether an absolute value of the k-th component of a first displacement is equal to 0;
    third field information, wherein the third field information is used to indicate whether the absolute value of the k-th component of the first displacement is greater than 0;
    fourth field information, wherein the fourth field information is used to indicate whether the absolute value of the k-th component of the first displacement is greater than 1; and
    fifth field information, wherein the fifth field information is used to indicate a value obtained by subtracting a first preset value from the k-th component of the first displacement; wherein
    the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

7. The method according to any one of claims 1 to 5, wherein the target bitstream comprises an atlas bitstream, and the atlas bitstream comprises at least one of the following:

    first field information, wherein the first field information is used to indicate the number of first vertices;
    sixth field information, wherein the sixth field information is used to indicate the number of subdivision processing iterations for one first mesh in one encoding unit;

seventh field information, wherein the seventh field information is used to indicate the number of second vertices;

eighth field information, wherein the eighth field information is used to indicate whether an absolute value of the k-th component of a second displacement is greater than 0;

ninth field information, wherein the ninth field information is used to indicate whether the k-th component of the second displacement is greater than 0;

tenth field information, wherein the tenth field information is used to indicate whether the absolute value of the k-th component of the second displacement is greater than 1; and

eleventh field information, wherein the eleventh field information is used to indicate a value obtained by subtracting a second preset value from the k-th component of the second displacement; wherein

the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

8. A decoding processing method, applied to a decoding end and comprising:

receiving a target bitstream, wherein the target bitstream comprises a displacement bitstream and target identification information, and the target identification information is used to indicate that an encoding mode of the displacement bitstream is a video encoding mode or an entropy encoding mode;

determining a target decoding mode based on the target identification information; and

decoding the displacement bitstream based on the target decoding mode to obtain a third vertex displacement.

9. The method according to claim 8, wherein in a case that the target decoding mode is an entropy decoding mode, the decoding the displacement bitstream based on the target decoding mode to obtain a third vertex displacement comprises any one of the following:

inputting the displacement bitstream into an entropy decoder for decoding to obtain a fourth vertex displacement, and performing displacement reconstruction processing on the fourth vertex displacement to obtain the third vertex displacement; and

inputting the displacement bitstream into the entropy decoder for decoding to obtain the third vertex displacement.

10. The method according to claim 9, wherein the displacement reconstruction processing comprises inverse coefficient quantization and inverse wavelet transform.

11. The method according to claim 9, wherein the inputting the displacement bitstream into an entropy decoder for decoding to obtain a fourth vertex displacement, and performing displacement reconstruction processing on the fourth vertex displacement to obtain the third vertex displacement comprises:

in a case that assistance information comprises a processing parameter for displacement processing of the first vertex displacement, inputting the displacement bitstream into an entropy decoder for decoding to obtain a fourth vertex displacement; and

performing displacement reconstruction processing on the fourth vertex displacement based on the processing parameter to obtain the third vertex displacement; wherein

the assistance information is used for assisting a decoding end in decoding, and the first vertex displacement is used for determining the displacement bitstream.

12. The method according to claim 11, wherein the inputting the displacement bitstream into the entropy decoder for decoding to obtain the third vertex displacement comprises:

in a case that the assistance information does not comprise a processing parameter for displacement processing of the first vertex displacement, inputting the displacement bitstream into the entropy decoder for decoding to obtain the third vertex displacement; wherein

the first vertex displacement is used for determining the displacement bitstream.

13. The method according to claim 11 or 12, wherein the displacement processing comprises wavelet transform and coefficient quantization.

**14.** The method according to any one of claims 8 to 13, wherein the target bitstream comprises an atlas bitstream determined based on assistance information, the target identification information is part information in the atlas bitstream, and the assistance information is used to assist a decoding end in decoding.

**15.** The method according to any one of claims 8 to 13, wherein the target identification information is information used to indicate functions and algorithms that a decoding end needs to support.

**16.** The method according to any one of claims 8 to 10, wherein the target bitstream further comprises an atlas bitstream, and the atlas bitstream comprises at least one of the following:

first field information, wherein the first field information is used to indicate the number of first vertices;
second field information, wherein the second field information is used to indicate whether an absolute value of the k-th component of a first displacement is equal to 0;
third field information, wherein the third field information is used to indicate whether the absolute value of the k-th component of the first displacement is greater than 0;
fourth field information, wherein the fourth field information is used to indicate whether the absolute value of the k-th component of the first displacement is greater than 1; and
fifth field information, wherein the fifth field information is used to indicate a value obtained by subtracting a first preset value from the k-th component of the first displacement; wherein
the first vertex indicates a vertex corresponding to one first mesh in one encoding unit, the first displacement indicates a vertex displacement of the v-th vertex in the first vertices or a displacement obtained through shift processing on a vertex displacement of the v-th vertex in the first vertices, and both k and v are positive integers.

**17.** The method according to any one of claims 8 to 10, wherein the target bitstream further comprises an atlas bitstream, and the atlas bitstream comprises:

first field information, wherein the first field information is used to indicate the number of first vertices;
sixth field information, wherein the sixth field information is used to indicate the number of subdivision processing iterations for one first mesh in one encoding unit;
seventh field information, wherein the seventh field information is used to indicate the number of second vertices;
eighth field information, wherein the eighth field information is used to indicate whether an absolute value of the k-th component of a second displacement is greater than 0;
ninth field information, wherein the ninth field information is used to indicate whether the k-th component of the second displacement is greater than 0;
tenth field information, wherein the tenth field information is used to indicate whether the absolute value of the k-th component of the second displacement is greater than 1; and
eleventh field information, wherein the eleventh field information is used to indicate a value obtained by subtracting a second preset value from the k-th component of the second displacement; wherein
the first vertex indicates a vertex corresponding to one first mesh in one encoding unit, the second vertex indicates a vertex generated by performing the j-th subdivision processing on one first mesh in one encoding unit, the second displacement indicates a vertex displacement of the v-th vertex in the second vertices or a displacement obtained through shift processing on a vertex displacement of the v-th vertex in the second vertices, and j, k, and v are all positive integers.

**18.** An encoding processing apparatus, applied to an encoding end and comprising:

a first processing module, configured to determine a base mesh bitstream based on a to-be-encoded mesh;
a first encoding module, configured to perform displacement encoding on first vertex displacements to obtain a displacement bitstream, wherein the first vertex displacement is obtained by adjusting a displacement order for a reconstructed base mesh that is obtained by reconstructing the base mesh bitstream based on displacement information, the displacement information is obtained by performing subdivision processing and deformation processing on a first mesh, and the first mesh is obtained by performing mesh simplification and mesh parameterization on the to-be-encoded mesh; and
a generating module, configured to generate a target bitstream based on a to-be-encoded texture map corresponding to the to-be-encoded mesh, the base mesh bitstream, and the displacement bitstream, wherein the target bitstream comprises target identification information, and the target identification information is used to indicate that an encoding mode of the displacement bitstream is a video encoding mode or an entropy encoding mode.

19. A decoding processing apparatus, applied to a decoding end and comprising:

a receiving module, configured to receive a target bitstream, wherein the target bitstream comprises a displacement bitstream and target identification information, and the target identification information is used to indicate that an encoding mode of the displacement bitstream is a video encoding mode or an entropy encoding mode; a determining module, configured to determine a target decoding mode based on the target identification information; and a first decoding module, configured to decode the displacement bitstream based on the target decoding mode to obtain a third vertex displacement.

20. An electronic device, comprising a processor and a memory, wherein a program or instructions capable of running on the processor are stored in the memory, and when the program or instructions are executed by the processor, the steps of the encoding processing method according to any one of claims 1 to 7 are implemented, or when the program or instructions are executed by the processor, the steps of the decoding processing method according to any one of claims 8 to 17 are implemented.

21. A readable storage medium, wherein the readable storage medium stores a program or instructions, and when the program or instructions are executed by a processor, the steps of the encoding processing method according to any one of claims 1 to 7 are implemented, or when the program or instructions are executed by a processor, the steps of the decoding processing method according to any one of claims 8 to 17 are implemented.

FIG. 1

FIG. 2

```
┌─────────────────────────────────────────────┐
│  Determine a base mesh bitstream based on a to-be-  │ ⌐ 301
│              encoded mesh                     │
└─────────────────────────────────────────────┘
                      │
                      ▼
┌─────────────────────────────────────────────┐
│  Perform displacement encoding on first vertex  │ ⌐ 302
│  displacements to obtain a displacement bitstream │
└─────────────────────────────────────────────┘
                      │
                      ▼
┌─────────────────────────────────────────────┐
│  Generate a target bitstream based on a to-be-encoded  │ ⌐ 303
│  texture map corresponding to the to-be-encoded mesh,  │
│  the base mesh bitstream, and the displacement bitstream │
└─────────────────────────────────────────────┘
```

FIG. 3

Merge

FIG. 4

$S^0$          $S^1$          $S^2$

FIG. 5

FIG. 6

Receive a target bitstream, where the target bitstream includes a displacement bitstream and target identification information — 701

Determine a target decoding mode based on the target identification information — 702

Decode the displacement bitstream based on the target decoding mode to obtain a third vertex displacement — 703

FIG. 7

**FIG. 8**

**FIG. 9**

Encoding processing apparatus 900

First processing module 901

First encoding module 902

Generating module 903

1000

Decoding processing
apparatus

Receiving module — 1001

Determining module — 1002

First decoding module — 1003

FIG. 10

1100

Communication device

1101 — Processor ⟺ Memory — 1102

FIG. 11

1200

FIG. 12

## INTERNATIONAL SEARCH REPORT

International application No.

**PCT/CN2024/080893**

### A. CLASSIFICATION OF SUBJECT MATTER

H04N19/20(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, DWPI, ENTXT, JVET, CNKI, IEEE: 点云, 三维, 体积, 网格, 压缩, 编码, 解码, 顶点, 位移, 移位, 基础, 辅助, 元信息, point cloud, three-dimensional, volumetric, mesh, compression, coding, encoding, decoding, vertex, displacement, shift, base, auxiliary, meta, data, information

### C. DOCUMENTS CONSIDERED TO BE RELEVANT

| Category* | Citation of document, with indication, where appropriate, of the relevant passages | Relevant to claim No. |
|---|---|---|
| X | Khaled Mammou et al. "Video and Subdivision based Mesh Coding" *2022 10th European Workshop on Visual Information Processing (EUVIP)*, 20 October 2022 (2022-10-20), abstract, text, pages 1-6, sections II-V, and figures 1-5 | 1-5, 8-15, 18-21 |
| X | YiHyun Choi et al. "Overview of the Video-based Dynamic Mesh Coding (V-DMC) Standard Work" *2022 13th International Conference on Information and Communication Technology Convergence (ICTC)*, 25 November 2022 (2022-11-25), text, pages 1-4, sections II-IV, and figures 1-9 | 1-5, 8-15, 18-21 |
| A | CN 113470179 A (INTEL CORP.) 01 October 2021 (2021-10-01) entire document | 1-21 |
| A | JP 2021022122 A (CANON K. K.) 18 February 2021 (2021-02-18) entire document | 1-21 |
| A | US 2021174551 A1 (SONY CORP.) 10 June 2021 (2021-06-10) entire document | 1-21 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **24 May 2024** | **31 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 683 324 A1**

**INTERNATIONAL SEARCH REPORT**

| International application No. |
| --- |
| **PCT/CN2024/080893** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2022051467 A1 (INTEL CORP.) 17 February 2022 (2022-02-17)<br>entire document | 1-21 |

Form PCT/ISA/210 (second sheet) (July 2022)

## INTERNATIONAL SEARCH REPORT
### Information on patent family members

International application No.

**PCT/CN2024/080893**

| Patent document cited in search report | | | Publication date (day/month/year) | Patent family member(s) | | | Publication date (day/month/year) |
|---|---|---|---|---|---|---|---|
| CN | 113470179 | A | 01 October 2021 | AU | 2020294195 | A1 | 30 September 2021 |
| | | | | SG | 10202012215 | RA | 28 October 2021 |
| | | | | JP | 2021149942 | A | 27 September 2021 |
| | | | | EP | 3882859 | A1 | 22 September 2021 |
| | | | | KR | 20210116199 | A | 27 September 2021 |
| | | | | US | 2021287431 | A1 | 16 September 2021 |
| | | | | BR | 102021001377 | A2 | 28 September 2021 |
| | | | | TW | 202137142 | A | 01 October 2021 |
| JP | 2021022122 | A | 18 February 2021 | JP | 7442993 | B2 | 05 March 2024 |
| US | 2021174551 | A1 | 10 June 2021 | JP | 2022542419 | A | 03 October 2022 |
| | | | | JP | 7303992 | B2 | 06 July 2023 |
| | | | | WO | 2021116838 | A1 | 17 June 2021 |
| | | | | US | 11348285 | B2 | 31 May 2022 |
| | | | | KR | 20220084407 | A | 21 June 2022 |
| | | | | EP | 4052471 | A1 | 07 September 2022 |
| US | 2022051467 | A1 | 17 February 2022 | DE | 102021121187 | A1 | 03 March 2022 |
| | | | | EP | 4196960 | A1 | 21 June 2023 |
| | | | | WO | 2022039868 | A1 | 24 February 2022 |
| | | | | NL | 2028745 | A | 07 April 2022 |
| | | | | NL | 2028745 | B1 | 04 July 2022 |
| | | | | TW | 202209259 | A | 01 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310262637